# EUROPEAN PATENT APPLICATION

(11) **EP 1 235 383 A1**
(43) Date of publication of application: **28.08.2002**
(21) Application number: 01979011.2
(22) Date of filing: 05.11.2001
(51) Int. Cl.: H04L 12/18, H04L 1/16, H04H 1/02, G06F 13/00

(54) **TRANSMITTER, RECEIVER, AND BROADCAST DATA DISTRIBUTION METHOD**

(30) Priority: 06.11.2000 JP 2000337088; 28.11.2000 JP 2000360614
(71) Applicant: Matsushita Electric Industrial Co., Ltd., Kadoma-shi, Osaka 571-0050 (JP)
(72) Inventor: TATSUMI, Hidenori, Higashihiroshima-shi, Hiroshima 739-0025 (JP); UEDA, Eiji, Toyota-gun, Hiroshima 729-2507 (JP); OOI, Yuji, Hiroshima-shi, Hiroshima 732-0001 (JP)
(74) Representative: Dempster, Benjamin John Naftel
(86) International application number: JP0109666
(87) International publication number: WO02037763

(57) **Abstract**

A transmitter, a receiver and a broadcast data delivering method for broadcasting data from the transmission side through a broadcast delivery path which uses a broadcast wave as a medium, and receiving the broadcast data on the reception side. In a transmitter, when a retransmission request is made only through a broadcasting path or a bidirectional communication path, the delivery efficiency is low and even guaranteed reliability is difficult. Therefore, retransmission request receiving means, forming of the transmitter, receives a retransmission request from a receiver, and retransmission request storing means stores the retransmission request. Subsequently, retransmission control means selects a transmission path utilized for retransmission of data from a broadcasting path or a bidirectional communication path based on the retransmission request, and retransmits the data, thereby improving the delivery efficiency and guarantee the reliability.

## Description

### Technical field

The present invention relates to a transmitter, a receiver, and a broadcast data delivering method, and more particularly, to a transmitter, a receiver, and a broadcast data delivering method for broadcasting data from the transmission side through a broadcast delivery path which uses a broadcast wave as a medium, and receiving the broadcast data on the reception side.

### Background Art

Services for delivering digital contents such as music data, moving images, still images, text data and the like through the Internet have extensively spread in recent years. In this case, bidirectional communications are utilized for the transmission of contents, for example, through a telephone network and the like.

On the other hand, the broadcasting is also utilized as a means for delivering data. Since the broadcasting can simultaneously transmit the same data to a large number of users (broadcasting), though in a single direction, the broadcasting is utilized for services which are provided for many users. While the broadcasting has conventionally been only in analog form, digital broadcasting services have recently become popular, using satellites and cable television (CATV) as media, and the practice of digital ground wave broadcasting services is now under progress.

The digital broadcasting is suitable for delivering digital data, i.e., the above-mentioned contents, on account of its transmission scheme. Moreover, since a broadband is available, a service for delivering the contents has been brought into practice in a portion of the satellite-based digital broadcasting. In this case, since the contents are delivered from satellites to fixed receivers, stable reception can be ensured to some degree at the receivers, in spite of a single direction communication. However, even with the fixed receivers, delivered contents cannot be fully received at all times.

Thus, a carousel system has been utilized as a technology for delivering contents in a single direction communication.

The carousel system involves repeatedly delivering target data in data broadcasting included in a digital broadcasting service, and is defined in ISO/IEC (International Organization For Standardization/International Electrotechnical Commission) 13818-6. Specifically, at a receiver, even if data received in the first data broadcasting is incomplete due to partial dropping or the like, the incomplete data can be compensated by data received at the second time, third time, ..., delivered in accordance with the carousel system. This technology improves the reliability of the contents delivery in the single direction communication.

In recent years, mobile terminals such as portable telephones, Personal Digital (Data) Assistants (PDA), car-equipped radio, and the like are utilized everywhere, and the mobile terminals tend to be provided with increasingly more functions. One of such functions is a function of receiving the broadcasting services. This function permits the mobile terminal to download, for example, music data and the like through a digital broadcasting service to store/reproduce the music data.

However, if the broadcasting-based contents delivery service is applied to the mobile terminal, it is difficult to ensure the reliability of contents delivery only with the utilization of the carousel system. This is because the mobile terminal suffers from largely varying conditions in which the mobile terminal receives the broadcasting service, as opposed to a fixed receiver. It is possible to increase the reliability of contents delivery to some degree by increasing the number of times the data delivery is repeated in the carousel system. However, since the increase in the number of times of repetitions substantially results in a reduced amount of delivered data per unit time, this cannot be said to be an essential solution.

As a method of increasing the reliability of contents delivery, Japanese Unexamined Patent Publication No. 2000-13440 discloses a technology which utilizes a bidirectional communication path in addition to the above-mentioned single direction communication. Specifically, a (bidirectional) communication function provided in the receiver, using, for example, a telephone network, is utilized to receive data which the receiver failed to receive (dropped data and the like) using the bidirectional communication function. This enables a digital contents delivery service and the like which solve the problems inherent in the single direction communication, while enjoying the merits of the broadcasting that utilizes a broadband.

Moreover, a technology described in Japanese Unexamined Patent Publication No. 11-17737 (1999) involves transmitting information related to data (packets) which the receiver failed to receive to a transmission terminal equipped in a broadcasting station or the like, and again delivering from the transmission terminal the data, which the receiver failed to receive, based on the information utilizing the broadcasting (single direction communication).

The contents delivery utilizing the digital broadcasting advantageously reduces the unit price of the data delivery based on the broadcasting.

However, the reception of dropped data, for example, using the bidirectional communication function provided in the receiver as described above, would result in an increase in the unit price of data delivery. Specifically, a line use fee, for example, for a telephone line or the like, utilized for the bidirectional communication is generally charged to the user of the mobile terminal. For this reason, when the mobile terminal which has failed to receive, for example, a majority of certain music data, intends to receive the dropped portion of the music data through a telephone line, the user is charged with a high line use fee.

Moreover, the broadcasting relying on the digital broadcasting suffers from a largely varying receiving situation at a receiver, for example, due to the weather and the like. Specifically, in a bad weather situation, data is more likely to drop at receivers, and the receivers which have failed to receive the data would simultaneously issue a retransmission request with the intention of receiving a dropped portion (dropped packets) of the data, for example, utilizing telephone lines or the Internet. For this reason, the broadcasting station is required to ensure a number of lines which can accommodate a large amount of simultaneous retransmission requests, or when the Internet is utilized, to ensure the performance and bandwidth which can accommodate the retransmission requests through the Internet. However, when the same data is transmitted over a wide area, as in the digital broadcasting, it is impossible to support the simultaneously issued retransmission requests. Furthermore, for retransmission requests from mobile terminals and the like which have failed to receive, for example, a majority of music data, described above, a long time is required to transmit data of the dropped portion even for a single mobile terminal, it is still impossible to process the retransmission requests from a large number of such mobile terminals.

Taking the above-mentioned two problems into account, it seems to be substantially difficult to apply the technique utilizing a bidirectional communication path, described in the above-mentioned Japanese Unexamined Patent Publication No. 2000-13440, to the broadband broadcasting.

Moreover, the technology described in the above-mentioned Japanese Unexamined Patent Publication No. 11-17737 (1999) transmits all packets corresponding to the retransmission requests utilizing the broadcasting, although it describes that the number of times and time period can be limited to the retransmission of packets. In other words, when the above-mentioned technology is applied to the broadband broadcasting, corresponding packets must be delivered through the broadcasting shared by all receivers, for example, even for a retransmission request issued by a single receiver, so that there is a great deal of uselessness. In addition, when a receiver fails to normally receive only some of packets due to the limitation to the number of times of retransmission and a time period, the receiver cannot utilize the received incomplete contents and will end up in discarding them. In other words, some of receivers cannot receive the contents delivery service. If an extremely small number of terminals cannot receive the service, this will hardly give rise to a problem. However, particularly, in a current situation in which an increase is expected in the mobile terminals which could experience dropped data anytime, the above-mentioned technology would be insufficient for practicing the broadcasting-based contents delivery. Moreover, if the delivery service is fee-charging, it is a problem that even some of terminals cannot receive the service.

### Disclosure of Invention

The present invention has been made in view of such problems, and it is an object of the invention to provide a transmitter, a receiver, and a broadcast data delivering method which implement more efficient retransmission of data based on results of reception by the receiver, and are capable of keeping track of a receiving situation and charging by utilizing the reception results.

The present invention employs the following means to achieve the above objects. Specifically, a receiver is assumed to receive data broadcast from a transmitter through a broadcasting path which uses a broadcasting wave as a medium. Here, an error detecting means detects errors in received data, and retransmission request control means transmits a retransmission request which is a request for retransmitting data including the errors through a bidirectional communication path capable of bidirectionally transmitting data. Subsequently, a receiving means receives data corresponding to the retransmission request from the broadcasting path or bidirectional communication path.

In a transmitter which corresponds to the receiver, a retransmission request receiving means receives a retransmission request from the receiver, and a retransmission request storing means stores the retransmission request. Subsequently, a retransmission control means selects a transmission path utilized for retransmission of data from the broadcasting path or bidirectional communication path based on the retransmission request, and retransmits the data.

In the above-mentioned manner, by selecting a transmission path utilized for the retransmission based on a retransmission request from the receiver, it is possible to carry out the retransmission, such as transmitting packets which must be retransmitted in large quantity through the broadcasting transmission path, and transmitting packets which cause no problem with a relatively small amount of retransmission through the bidirectional communication path. As a result, the uselessness which can occur in the retransmission using the broadcasting path, i.e., the retransmission of packets destined to a small number of receivers using the broadcasting path, can be minimized to effectively utilize the broadcasting path. It is also possible to solve problems which can occur in the retransmission using the bidirectional communication path, such as a problem of reserving a line, a problem of preparation for the line capability and performance more than necessity, and the like. Moreover, in the receiver, the line use fee can be limited as compared with the acquisition of a large amount of dropped packets completely through the utilization of the bidirectional communication path, and required contents can be acquired without fail.

When the reception of data and the retransmission request are made in units of packets which form of the data, a data recovering means, in one configuration, which forms of the receiver, recovers the data using packets corresponding to a retransmission request received from the broadcasting path or the bidirectional communication path, and normally received packets.

In one configuration, the receiver may also include a data selecting means for selecting data for which a retransmission request is made based on a predetermined threshold value. In this configuration, by previously eliminating data which require a long time for compensating for dropped packets from those subjected to the retransmission request, a burden on the transmitter can be reduced when dropped packets are compensated for, for example, by utilizing a bidirectional communication path. Moreover, since only a short time is required for compensating the data selected as an object for the compensation, a pecuniary burden on the user can be reduced when the user utilizes a bidirectional communication path.

When the data selecting means accepts a selection of data to be received made by the user, data not required by the user need not be compensated, so that the burden on the transmitter can be further reduced.

In another configuration, the retransmission request control means may specify a retransmission path for the data in the retransmission request.

In this configuration, a path for retransmitting dropped packets can be selected at the receiver, so that the selection can be made in accordance with the importance, for example, receiving contents not important for the user utilizing the free broadcasting path, though the contents cannot be received in some cases, and receiving important contents without fail utilizing the bidirectional communication path, even if it is fee-charging. It is also possible to make a selection in accordance with the user's environment, such as, selecting the bidirectional communication path when the user enters an underground town or the like in which the broadcasting does not reach, and selecting the broadcasting path when the user is in a place at which the broadcasting can be received.

Further, in another configuration, the retransmission control means dynamically changes a transmission efficiency or a transmission quality on the broadcasting path based on the number of retransmission requests stored in the retransmission request storing means.

In this configuration, the transmitter can maintain an optimal transmission efficiency and transmission quality at all times.

Moreover, in another configuration, a transmitter is assumed to broadcast data through a broadcasting path which uses a broadcasting wave as a medium, wherein a broadcasting transmission control means transmits reception disabled data which cannot be received to a receiver to which the data is to be transmitted, the retransmission request receiving means receives a retransmission request which is a request for retransmitting the reception disabled data from the receiver, the retransmission request storing means stores the retransmission request, and a receiving situation totalizing means totalizes a receiving situation of the receiver based on retransmission requests stored in the retransmission request storing means.

In this configuration, a receiving situation (audience rate) of a content can be known from the number of received retransmission requests by transmitting the reception disabled packet at a certain time.

Moreover, in another configuration, the broadcasting transmission control means, which forms of a transmitter, transmits reception disabled data which cannot be received to a receiver to which the data is to be transmitted, the retransmission request receiving means receives a retransmission request which is a request for retransmitting the reception disabled data from the receiver, the retransmission request storing means stores the retransmission request, and a charging means authenticates and/or charges a receiver which transmits a retransmission request based on the retransmission request stored in the retransmission request storing means.

In this configuration, the transmitter can authenticate a receiver, limit destinations, charge paid data, and the like by manipulating contents to generate a retransmission request from the receiver.

Further, in another configuration, a receiver is assumed to receive a plurality of contents included in data broadcast from a transmitter through a broadcasting path which uses a broadcasting wave as a medium, wherein the error detecting means detects errors in packets which form of the received data, and the data selecting means for eliminating contents which include packets including the errors, creating a delivered data list consisting only of normally received contents, and selectively displaying the delivered data list to a user.

The transmitter and receiver can be embodied using a computer. In this case, the means forming of the transmitter and receiver are embodied by operating a program on the computer.

### Brief Description of Drawings

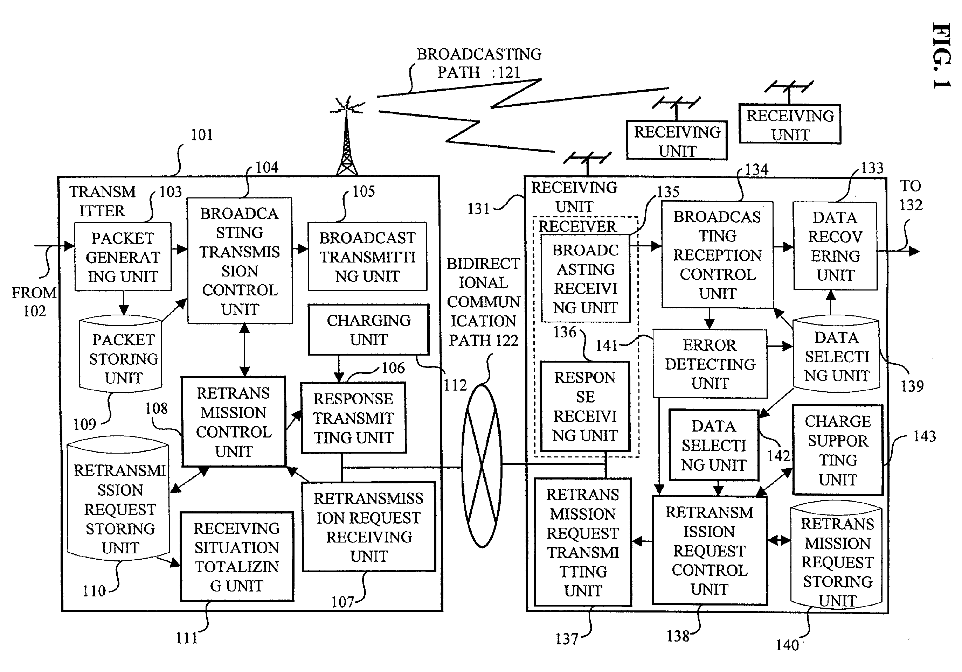

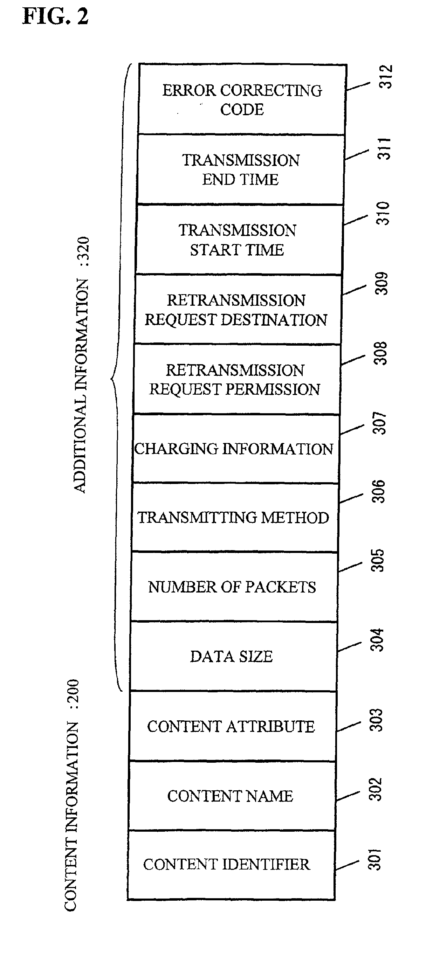

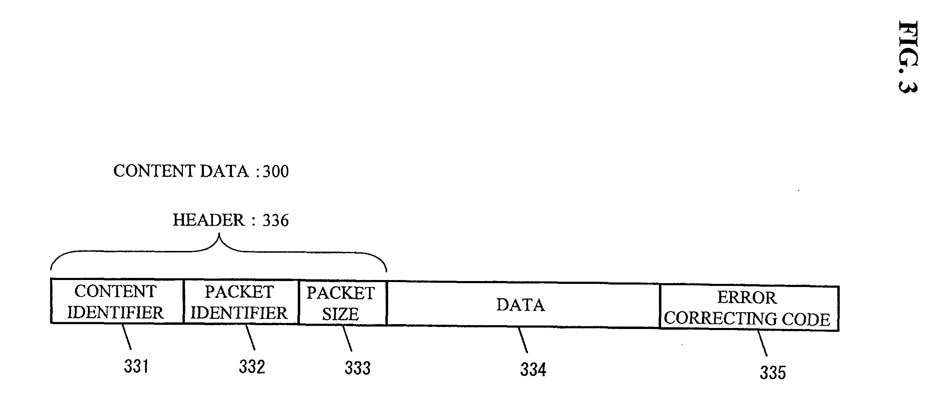

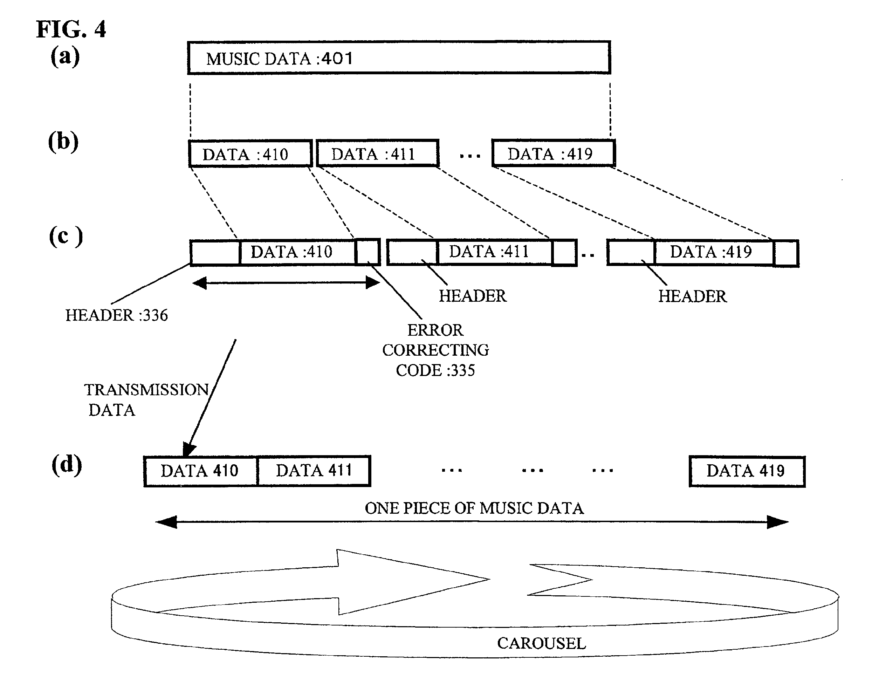

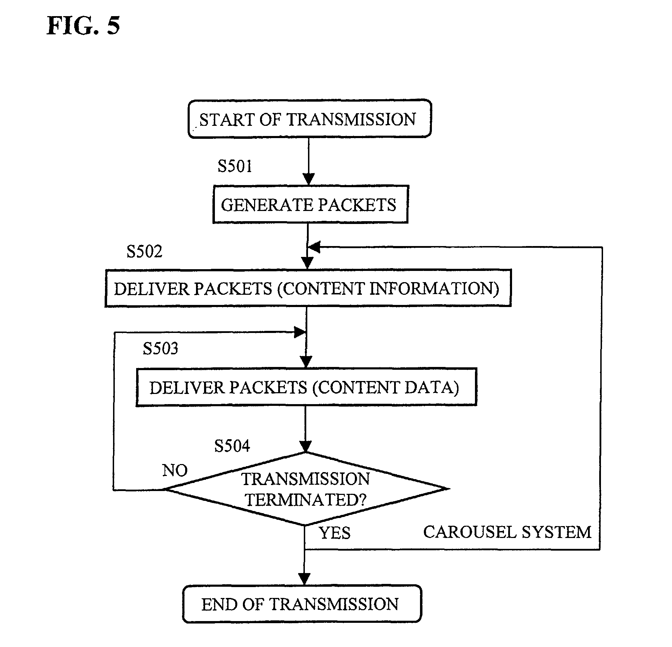

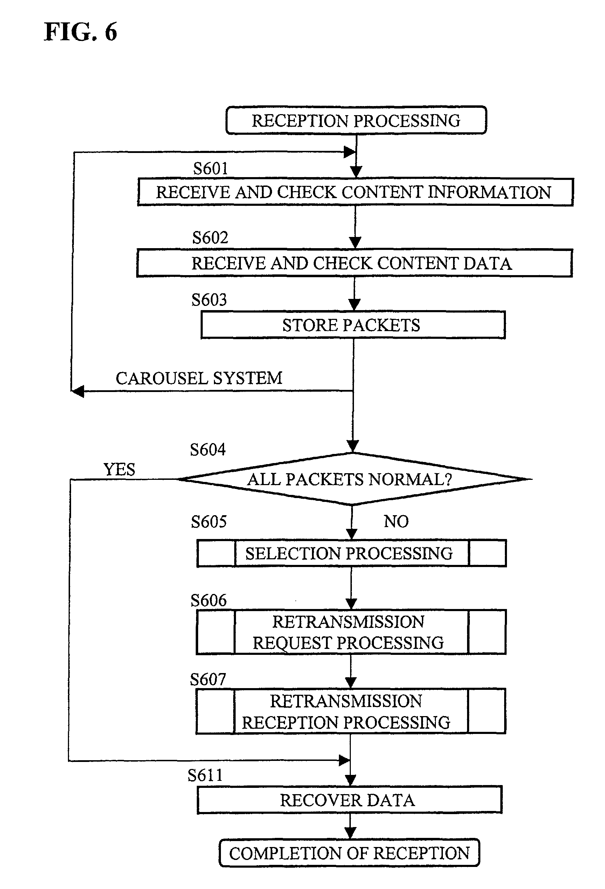

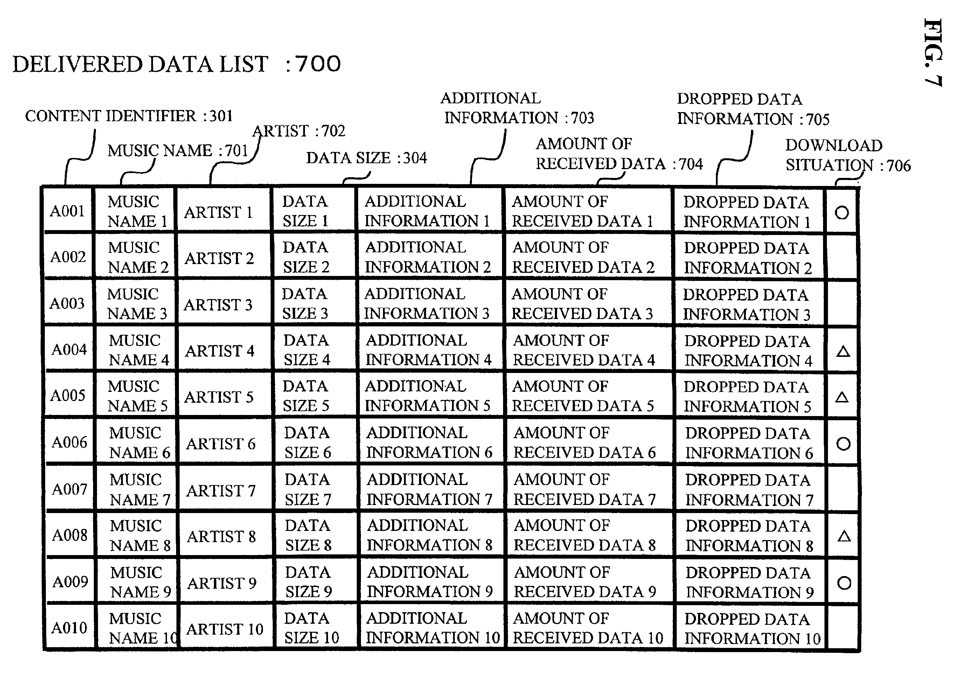

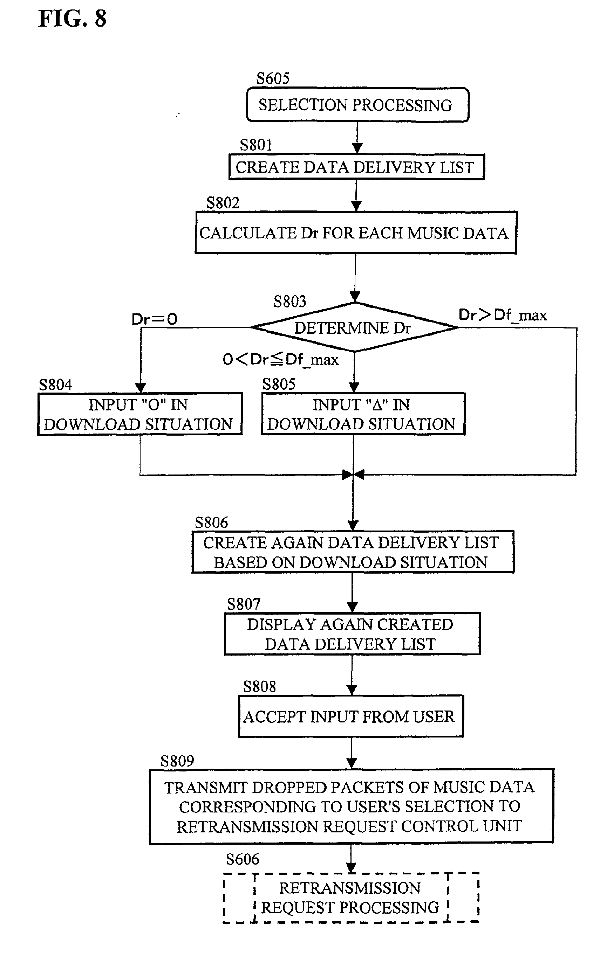

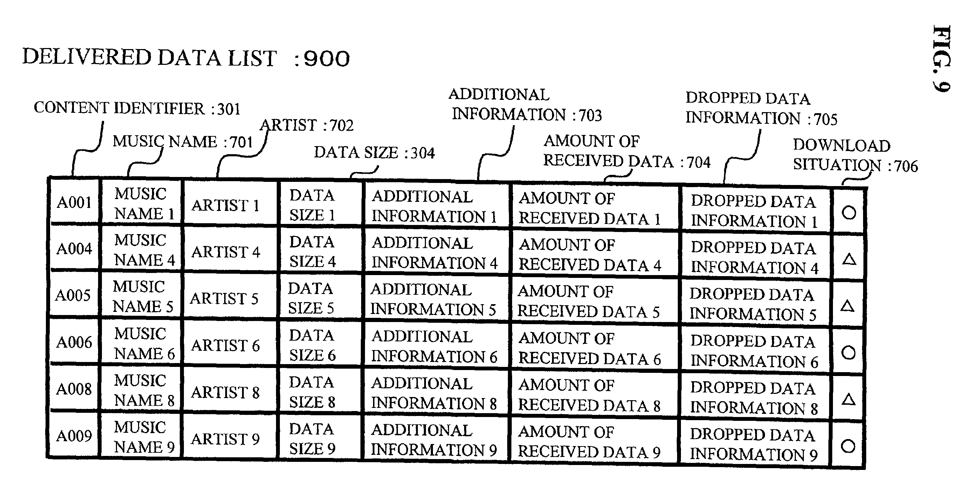

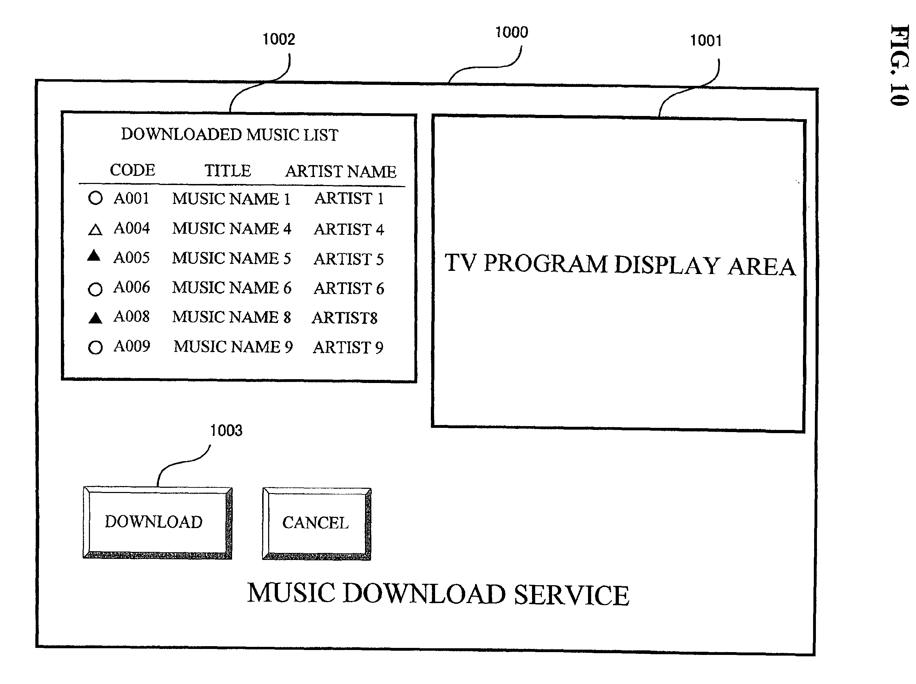

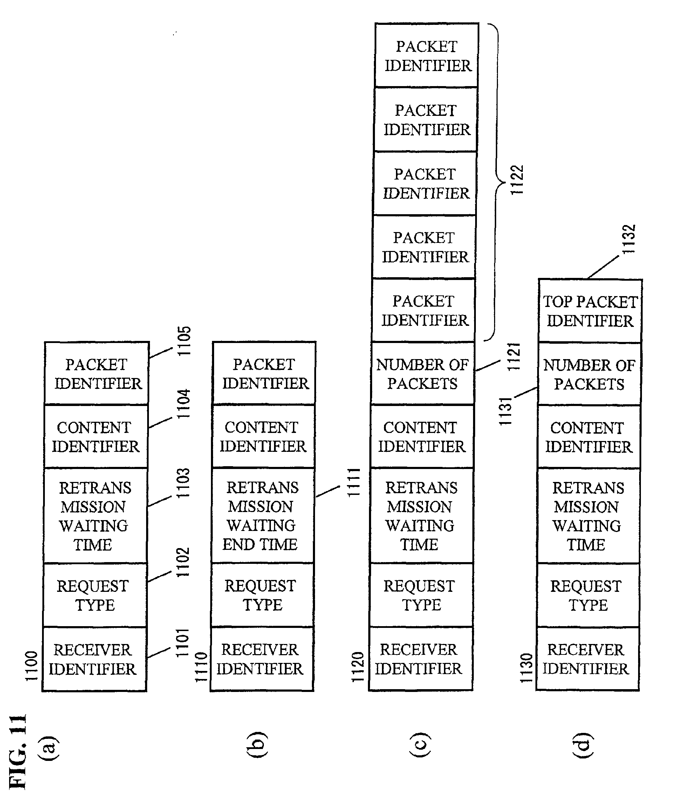

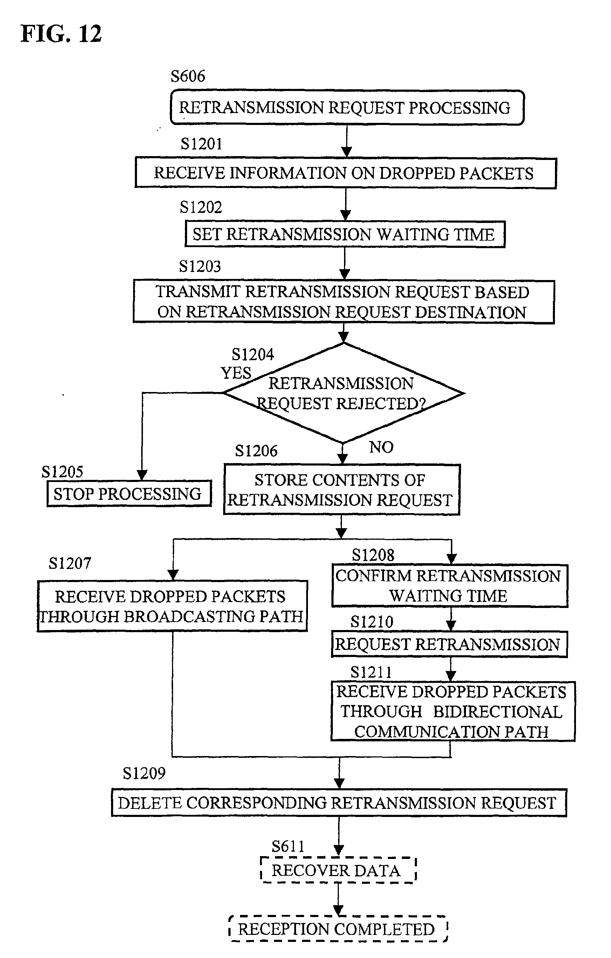

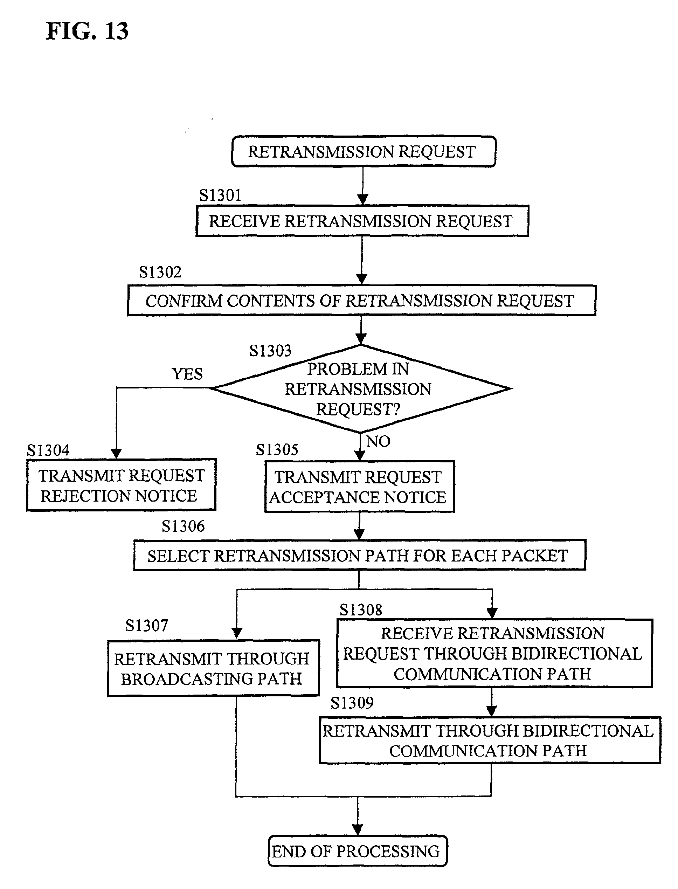

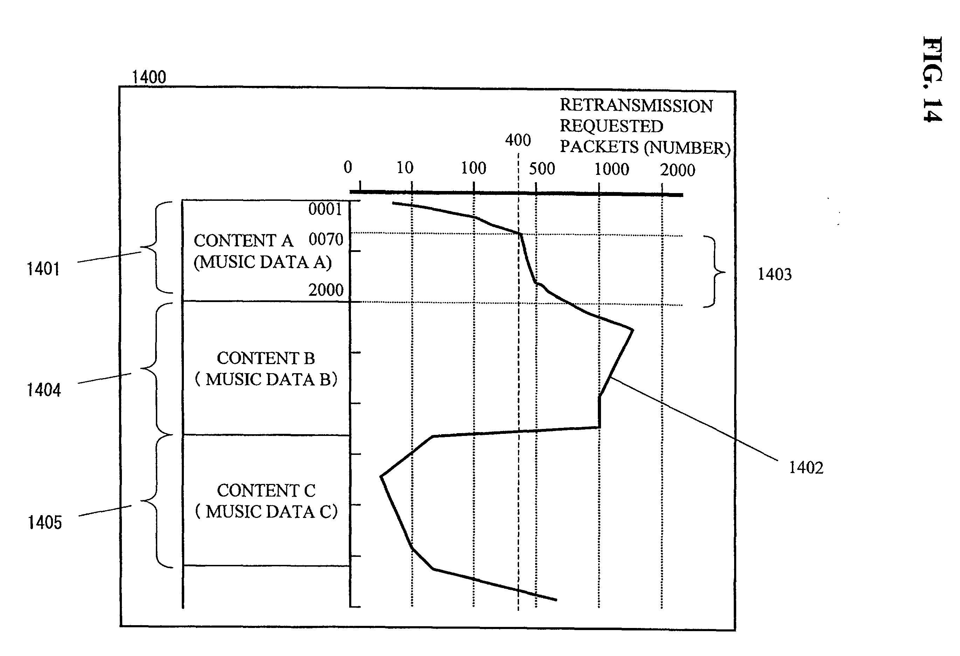

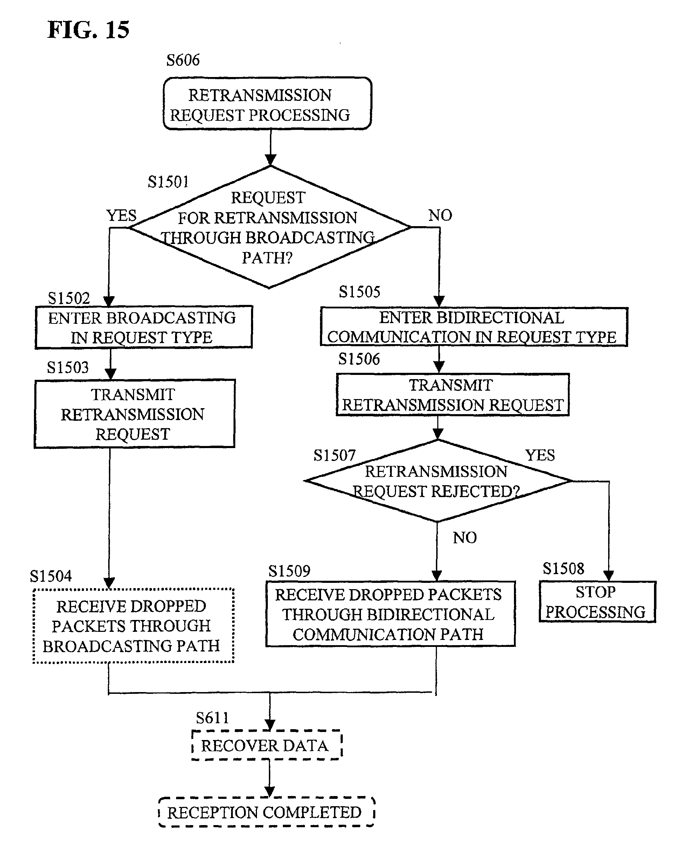

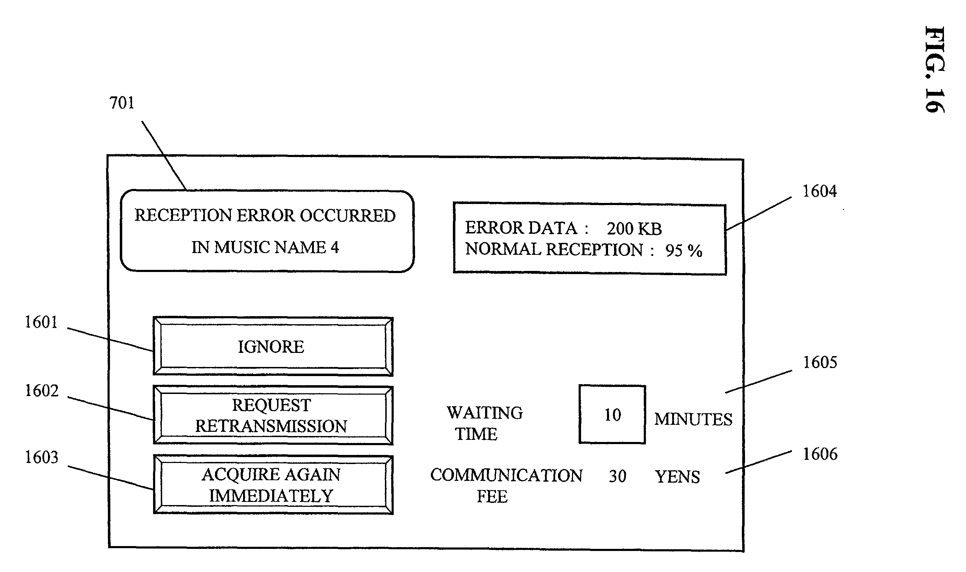

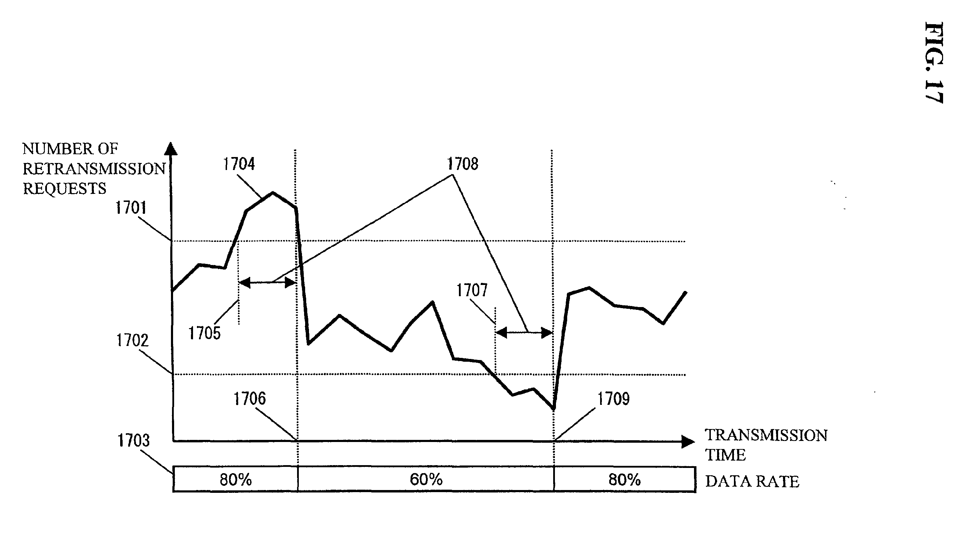

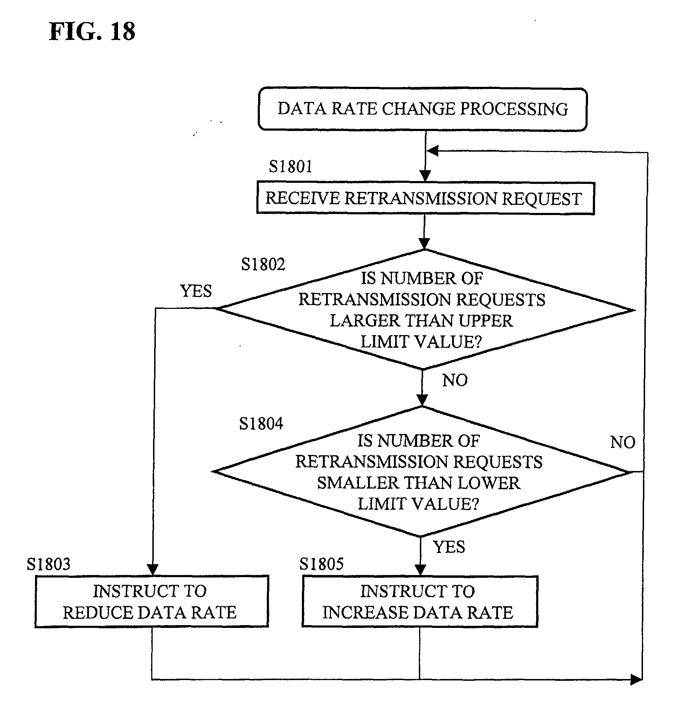

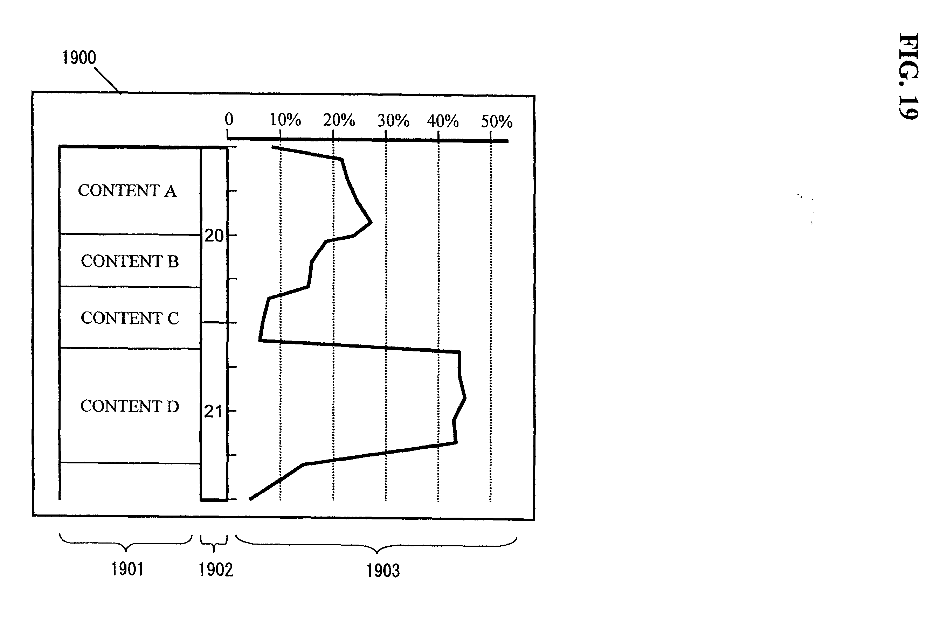

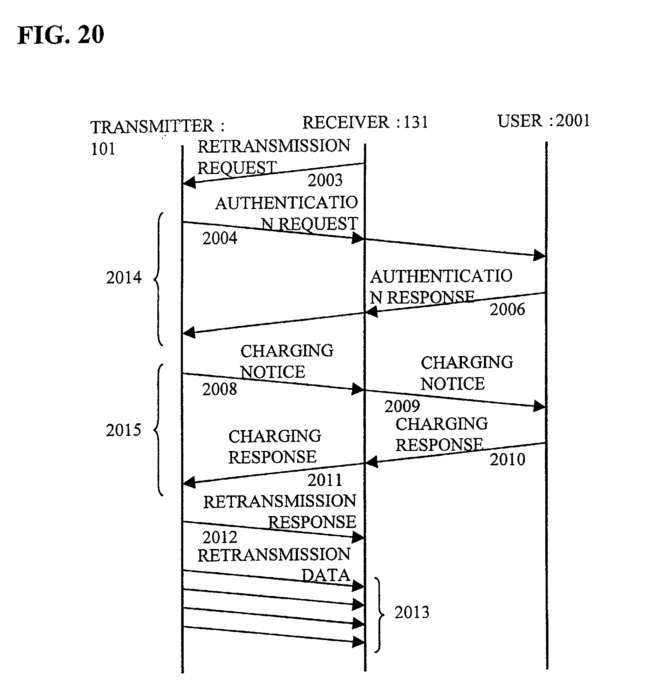

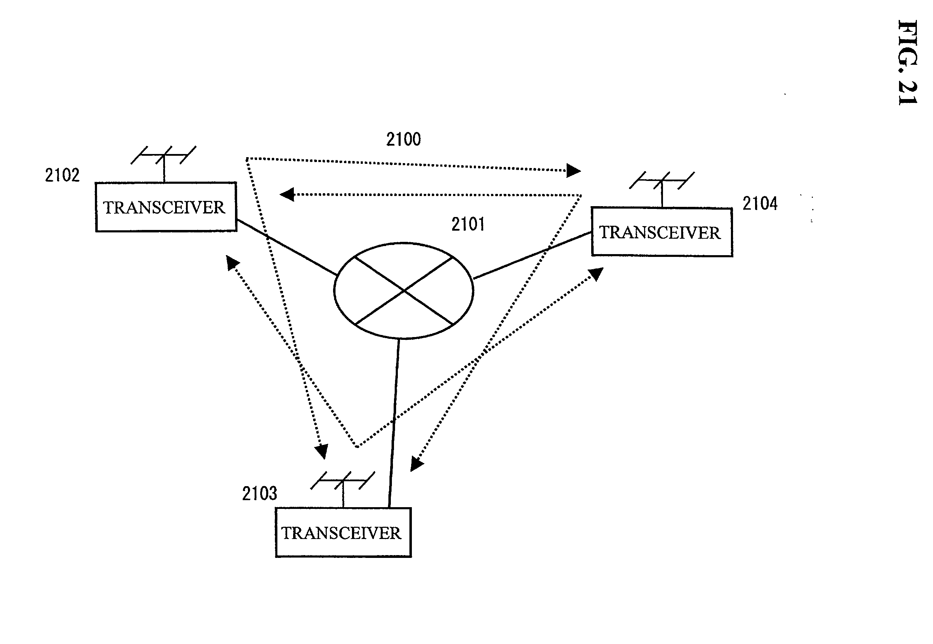

Fig. 1 is a functional block diagram showing the general configuration of a transmitter and a receiver; Fig. 2 shows a configuration example of a content information packet; Fig. 3 shows a configuration example of a content data packet; Figs. 4 is an image diagram representing a delivery of divided music data; Fig. 5 is a flow chart in data transmission in the transmitter; Fig. 6 is a flow chart of a data reception processing in the receiver; Fig. 7 is an image diagram showing an example of a delivered data list; Fig. 8 is a flow chart of a selection processing in the receiver; Fig. 9 is an image diagram showing an example of a delivered data list after it is processed; Fig. 10 is an image diagram showing an example of a downloaded music selection list; Figs. 11 is a diagram showing a configuration example of a retransmission request packet; Fig. 12 is a flow chart of a retransmission request processing in the receiver; Fig. 13 is a flow chart of a retransmission processing in the transmitter; Fig. 14 is a graph visually representing a retransmission request for packets which constitute contents; Fig. 15 is a second flow chart of the retransmission request processing in the receiver; Fig. 16 is a diagram showing a display example for prompting the user to select a retransmission path; Fig. 17 is a graph showing the number of retransmission requests; Fig. 18 is a flow chart of a data rate change processing in the transmitter; Fig. 19 is a diagram showing an example of a graph which represents a program rating for contents; Fig 20 is a flow chart showing an example of a communication transmitted/received with respect to a retransmission request; and Fig. 21 is a diagram of a data delivery system.

### Best Mode for Carrying Out the Invention

In the following, embodiments of a transmitter, a receiver, and a transmission/reception system according to the present invention will be described with reference to the accompanying drawings. It should be understood that the following embodiments are mere examples which embody the present invention, and do not characteristically limit the technical scope of the present invention. The following description will be made on a music data delivery service through data broadcasting, taken as an example of contents.

### (EMBODIMENT 1)

First, the general configuration of a transmitter, a receiver and a transmission/reception system according to the present invention will be described with reference to Fig. 1.

For delivering music data, a broadcasting station, which serves as the transmission side, is provided with a transmitter 101. Here, the transmitter 101 inputs music data, for example, from a music server 102 or the like which provides music data for delivery, processes the music data into a defined format using a predetermined procedure, and delivers the processed music data to receivers through a broadcasting path 121. The broadcasting used herein refers to a method of simultaneously transmitting certain data to a plurality of receivers. Specifically, the broadcasting may be ground wave digital broadcasting, digital satellite broadcasting, cable television (CATV) and the like, and classified corresponding to the broadcasting path 121.

A receiver 131, which serves as the reception side when the music data is delivered, may be, for example, a television, a broadcasting tuner, STB (Set-Top Box), a portable telephone or the like. The STB is a general term for devices which are connected to a home television to provide additional functions, such as a control box associated with a cable television, a terminal device of a communication karaoke, and the like.

As the receiver 131 receives the broadcast music data, the receiver 131 transmits the received music data to a reproducing apparatus 132, for example, a television, a radio, a stereo or the like, as required, and the reproducing apparatus 132 reproduces the received music data. The transmission/reception system is formed of the transmitter and receiver. The foregoing is a summary of music data delivery, details of which will be described later.

### (DATA STRUCTURE)

Next, description will be made on details of the music data transmitted from the transmitter 101 to the receiver 131.

Delivered data for use in the delivery of music data in the first embodiment can be roughly classified into two, specifically, a content information 200 shown in Fig. 2, and a content data 300 shown in Fig. 3.

The content data 200 may be used as a table of contents, and includes a content identifier 301, a content name 302, a content attribute 303, and additional information 320. The additional information 320 includes a data size 304, a number of packets 305, a transmitting method 306, a charging information 307, a retransmission request permission 308, a retransmission request destination 309, a transmission start time 310, a transmission end time 311, and an error correcting code 312.

The content identifier 301 is information with which delivered data can be uniquely identified, the content name 302 includes information indicative of the contents of data, i.e., the name of music, the name of the artist, and the like. The content attribute 303 stores the type of data (moving image, audio, text, and the like), and the format of data (MPEG, PCM and the like). Further, the data size 304 indicates a total size of the content data 300 corresponding to the content identifier 301, while the number of packet 305 indicates the number of packets into which the content data 300 is divided for transmission. The charging information 307 stores information indicating whether delivered music data is paid or free, and the retransmission request permission 308 indicates whether or not a retransmission request is permitted when the receiver fails to receive the music data. The retransmission request destination 309 stores information such as the address (URL: Uniform Resource Locators), telephone number or the like of the destination to which the retransmission request is sent, when the retransmission request permission 308 is set to "request permitted." The transmission start time 310 and transmission end time 311 indicate together a period of time in which the digital contents 300 are transmitted. Specifically, since the carousel system is generally used for the content information 200 and content data 300, the same data is repeatedly transmitted within a constant period of time. Therefore, if there are unreceived packets by the transmission end time 311, the receiver 131 can determine that the unreceived packets are dropped packets. The error correcting code 312 is a bit sequence for checking whether or not the content data 300 is defective.

The content data 300 has a configuration that a encoded music data 401 shown in Fig. 4(a) is, for example, divided into a plurality of data 410 to 419 shown in Fig. 4(b), and a header 336 and a error correcting code 335 are further added to each of the data 410 to 419 (Fig. 4(c)). The encoding may be based on an audio encoding scheme, for example, MPEG2-AAC, MPEG1Audio layer 3 or the like. Moreover, each of the data 410 to 419 corresponds to data 334 of the content data 300, and the header 336 includes a content identifier 331, a packet identifier 332, and a packet size 333.

The content identifier 331 indicates which of the plurality of content information 200 the content data 300 corresponds to. The packet identifier 332 is provided for determining which packets are required when a retransmission request is received from a receiver after delivering the content data 300, and is designated, for example, by a serial number. The packet size 333 indicates the data size of the content data 300.

While the content data 300 is multiplexed, and carried on a broadcast wave for delivery to each receiver, the carousel system repeatedly delivers the content information 200 and content data 300 from the transmitter 101 at a constant cycle, as shown in Fig. 4(d).

### (DATA DELIVERY PROCESSING IN TRANSMITTER)

Next, description will be made on content (music data) delivery processing in the transmitter 101.

First, a music data 401 inputted from the music server 102 or the like is processed into a content data 300 by a packet generating means 103, and stored in a packet storing means 109 (S501 in Fig. 5). In this event, content information 200 corresponding to the content data 300 is also generated simultaneously.

Here, the content information 200 stores a content identifier 301 corresponding to each music data 401. In addition, the above-mentioned content name 302, content attribute 303 and additional information 320 are also added, wherein the added information may be information previously entered by the operator, or information added by the packet generating means 101 if it contains contents (a data size, the number of packets, and the like) which can be automatically added.

Similarly, the content data 300 also stores the content identifier 331 corresponding to the music data 401.

The generated content information 200 and content data 300 are transmitted to a broadcasting transmission control means 104 after they are once stored in the packet storing means 109 or directly.

Subsequently, the broadcasting transmission control means 104 transmits the content information 200 to a broadcast transmitting means 105, which transmits the received content information 200 to the receiver 131 through the broadcasting path 121 (S502 in Fig. 5).

Next, the broadcasting transmission control means 104 transmits the content data 300 to the broadcast transmitting means 105 in a similar manner, and the broadcast transmitting means 105 transmits the received content data 300 to the receiver 131 through the broadcasting path 121 (S503 in Fig. 5).

The transmission of the content data 300 by the broadcast transmitting means 105 is performed until the content data 300 corresponding to the certain content information 200 is completely transmitted (No at S504 → S503 → Yes at S504 in Fig. 5).

In the above-mentioned manner, one piece of music data, for example, is delivered to the receiver. When there are a plurality of music data to be transmitted (assumed ten herein), the other music data is also delivered in a manner similar to the above, in which case, however, the content information 200 is first delivered for ten pieces before the content data 300 is delivered for the ten pieces.

When the carousel system is used in the delivery, the delivery of the content information 200 to the end of the delivery of the content data 300 are repeated within a given time period (S502 → Yes at S504 in Fig. 5).

The foregoing is the processing until the delivery of music data by the transmitter 101.

### (DATA RECEPTION PROCESSING IN RECEIVER)

Next, description will be made on a method of processing the content information 200 and content data 300 delivered by the transmitter 101 in the receiver 131.

As a broadcasting receiving means 135, forming of the receiver 131, receives the content information 200 through the broadcasting path 121, the received content information 200 is transmitted to a broadcasting reception control means 134. Next, the broadcasting reception control means 134 transmits the content information 200 to an error detecting means 141, and the error detecting means 141 uses the error correcting code 312 to confirm whether the content information 200 is being normally received (S601 in Fig. 6).

When the content information 200 is being normally received, the error detecting means 141 stores the content information 200 in a packet storing means 139. On the other hand, the content information 200 determined not to be normally received is discarded.

A plurality of content data 300, delivered subsequent to the content information 200, are also transmitted to the broadcasting reception control means 134 to the error detecting means 141, in a manner similar to the above. After normal reception is confirmed using the error correcting code 335, the content data 300 is stored in the packet storing means 139 (S602 → S603 in Fig. 6).

When the delivery is performed in accordance with the carousel system, the content information receiving processing (S601) to the packet storing processing (S603) are repeated a certain number of times.

Next, when the broadcasting reception control means 134 determines from the transmission end time 311 stored in the content information 200 that the data delivery using the carousel system has terminated, the broadcasting reception control means 134 detects dropped packets (content information 200 and content data 300) (S604 in Fig. 6). The end of the data delivery is confirmed by the transmission end time 311 included in the content information 200.

The dropped content information 200 may be determined from dropped content information corresponding to the content identifier 331 included in the content data 300. Moreover, when a plurality of content information 200 are transmitted, dropping may be determined from the absence of the content identifiers 301 which are designated by serial numbers.

The dropped content data 300 can be detected, for example, by referencing the content identifier 301, data size 304 and the number of packets 305 included in the content information 200, and calculating the number of corresponding content data 300, and a total of data 344. Here, the content data corresponding to the content information 200 refers to content data which has the content identifier 331 which matches the content identifier 301.

When dropped content data is detected, it is possible to known which content data is dropped by referencing the packet identifiers 332 which are designated by serial numbers.

In the detection of dropped packets, when the received packets are all normal, the content identifier 301 of each music data is transmitted to a data recovering means 133 (Yes at S604 in Fig. 6). The data recovering means 133, which has received the content identifiers 301, reads the content information 200 and content data 300 corresponding to the content identifiers 301 from the packet storing means 139, and recovers music data based on the content information 200 and content data 300 (S611 in Fig. 6).

The music data recovered by the data recovering means 133 is transmitted to the reproducing apparatus 132, for example, a television, a radio, a stereo or the like, as required, and the reproducing apparatus 132 reproduces the received music data. Moreover, the music data is stored in a storing means, not shown, as required, and read out for reproduction in response to the user's instruction.

The foregoing is the processing performed by the receiver 131 from the reception of music data to the reproduction.

### (SELECTION PROCESSING IN RECEIVER)

When packets, though received at the receiver 131, are not normal, or when the receiver 131 fails to receive packets themselves, such packets are regarded as dropped packets. Particularly, with a mobile terminal such as a car, a portable telephone or the like, it can be readily anticipated that dropped packets frequently occur due to the mobile terminal going into a tunnel or an underground town.

Therefore, the receiver 131 transmits a retransmission request, which is a request for transmitting dropped packets, to the transmitter 101 for acquiring the dropped packets.

However, it is anticipated that if a retransmission request is transmitted for all music data having dropped packets, i.e., incomplete music data, the transmitter 101 is immensely loaded. Moreover, the user who attempts to acquire the music data using the receiver 131 does not necessarily require (want) all the music data. Therefore, after the receiver 131 transmits the retransmission request to the transmitter 101, the selection processing is performed for selecting music data for which the retransmission request should be transmitted.

A data selecting means 142, forming of the receiver 131, creates a delivered data list 700, for example, shown in Fig. 7, using the content information 200 and content data 300 previously received from the packet storing means 139 (S801 in Fig. 8). The delivered data list 700 is formed of the content identifier 301, a music name 701 and an artist 702 retrieved from the content name 302, data size 304, an additional information 703, an amount of received data 704, a dropped data information 705, and a download situation 706. The amount of received data 704 is calculated by totalizing the data 334 of normally received packets. The dropped data information 705 in turn stores information on which content data is dropped, for example, using the packet identifier 332. The additional information 703 is formed of a portion or all of the information included in the additional information 320, however, is not necessarily required.

The download situation 706 indicates, for example, the condition of music data (download completed, dropped packets detected and the like) corresponding to the content identifier 301.

Next, the data selecting means 142 calculates Dr which is the difference between the data size 304 and the amount of received data 704 for each music data (a content having a different content identifier 301) (S802 in Fig. 8).

Then, the data selecting means 142 determines Dr (S803 in Fig. 8). Here, when Dr=0, meaning that all content data has been normally downloaded and can be reproduced, the data selecting means 142 inputs, for example, the download situation 706 to that effect (S803 → S804 in Fig. 8). Assume herein that the data selecting means 142 inputs "○" to the download situation 706 of contents which can be reproduced.

When 0<Dr<=Df_max, the music data can be reproduced without problem by downloading a constant number of dropped packets, so that the data selecting means 142 inputs, for example, "Δ" in the download situation 706 (S803 → S805 in Fig. 8). However, if information indicating that a retransmission request is not permitted is stored in the retransmission request permission 308 within the content information 200 of music data subjected to the retransmission request, the data selecting means 142 does not input "Δ" in the download situation 706.

The above-mentioned Df_max indicates a maximum value for the amount of dropped data to be delivered (transmitted) when dropped packets are received after the retransmission request, later described, is made. Specifically, when Df_max has a large value, the retransmission request can be made even if most of music data, for example, cannot be received through broadcasting. On the other hand, when Df_max has a small value and music data has not been sufficiently received through broadcasting, the retransmission request cannot be made. The Df_max can be freely set by the user on the receiver, or, for example, by the data selecting means 142.

When Dr>Df_max, the data selecting means 142 does not input anything in the download situation since the amount of data in dropped packets is larger than the maximum value for the amount of dropped data (which can be delivered).

As the data selecting means 142 has determined the Dr for each music data and input the download situation 706, the data selecting means 142 rebuilds the delivered data list 700 to create a delivered data list 900 shown in Fig. 9 (S806 in Fig. 8). Rebuilding, herein referred to, means that music data without any input in the download situation 706 is deleted from the list.

For example, in the delivered data list 700 shown in Fig. 7, reproducible music data are "A001," "A006" and "A009," and music data for which the retransmission request is permitted are "A004," "A005" and "A008".

In this example, the data selecting means 142 creates the delivered data list 900 (Fig. 9) which has "A001," "A004" to "A006," "A008" and "A009," the download situation 706 of which is set to "○" or "Δ". However, when the retransmission request, later described, is not performed, the delivered data list 900 may be created only with data which have the download situation 706 set to "○", i.e., data which have no dropped data.

Subsequently, the data selecting means 142 displays the delivered data list 900 as it is or only required items extracted therefrom, for example, on a display provided in the receiver 131, a television connected thereto, or the like (S807 in Fig. 8).

An example of the display is shown in Fig. 10. Here, the download situation 706, the content identifier 301, the music name 701 and the artist 702 in the delivered data list 900 are displayed on a television screen 1000 as a download selection screen 1002.

As the delivered data list 900 is displayed, the user selects required music data from the music data displayed in the delivered data list (S808 in Fig. 8). Since music data displayed with "○" can already be reproduced, music data eligible for the selection is one displayed with "Δ". Here, the selection may be made, for example, with a remote controller, or by the user who touches the TV screen 1000 which formed as a touch panel.

As the user selects music data, the data selecting means 142 changes the display of the download situation 706 associated with the selected music data to "▲". Moreover, as the user selects (depresses), for example, a display of download 1003, the information on the download situation 706 corresponding to the user's selection on the delivered data list 900 is also changed to "▲". When the delivered data list 900 is created from data which is free of dropped data, the user only selects, for example, required data, so that unnecessary data can be immediately deleted without storing such data in the receiver. Of course, data selected by the user can be immediately reproduced because it does not include any dropped data.

As the user has selected music data to be downloaded (for compensating for dropped packets), the data selecting means 142 transmits dropped packets of the music data corresponding to the user's selection to a retransmission request control means 138 (S809 in Fig. 8). Here, the dropped packets can be represented by a combination of the packet identifier 332 stored in the dropped data information 705 of the delivered data list 900, with the content identifier 301.

In the above-mentioned manner, by relying on a predetermined threshold value (herein, Df_max) to previously eliminate contents which include a lot of dropped packets and accordingly require a long time for compensating for the dropped packets from those subjected to the retransmission request, a burden on the transmitter 101 can be reduced when dropped packets are compensated for, for example, by utilizing a bidirectional communication path, later described. Moreover, since only a short time is required for compensating the contents selected as an object for the compensation, a pecuniary burden on the user can be limited when the user utilizes the bidirectional communication path.

Further, by displaying contents subjected to the compensation to prompt the user to select only a required content, unnecessary contents will not be compensated, thereby making it possible to further reduce a burden on the transmitter.

After previously eliminating contents which include a lot of dropped packets from contents subjected to the retransmission request using the predetermined threshold value, the retransmission request may be automatically made without performing the processing for prompting the user to select.

### (RETRANSMISSION REQUEST PROCESSING IN RECEIVER)

Next, description will be made on details of retransmission request processing performed by the retransmission requesting means 138. Upon receipt of packet identifiers, and content identifiers corresponding to the packet identifiers of dropped packets from the data selecting means 142, the retransmission request control means 138 requests the transmitter 101 to retransmit the dropped packets. In this event, the retransmission request is transmitted through the bidirectional communication path 122 such as a telephone line, the Internet or the like.

Figs. 11 show an example of format for a packet for use in the retransmission request. In Fig. 11(a), a receiver identifier 1101, forming of a packet 1100, is a value with which a receiver 131 that makes a retransmission request can be uniquely identified. Specifically, an address (IP address), a telephone number, and the like may be used. A request type 1102 indicates the contents of a retransmission request, a type, a format, and the like, details of which will be described later. A retransmission waiting time 1103 indicates a time for which a receiver which has made a retransmission request should wait for the retransmission of a packet specified with a packet identifier 1105. Therefore, the receiver will be waiting for the retransmission until the time which is the sum of the time at which the transmitter receives the retransmission request and the retransmission waiting time 1103. A packet 1110 in Fig. 11(b) specifies a retransmission waiting end time 1111 in place of the retransmission waiting time 1103. A content identifier 1104 and a packet identifier 1105 indicate a packet to be retransmitted to the transmitter, and correspond to the content identifier 331 and the packet identifier 332 in the content data 300. A certain packet can be uniquely identified using both content identifier 1104 and packet identifier 1105. However, when the packet identifier includes information with which the contents can be identified, the content identifier 1104 is not necessarily provided.

Further, other than the retransmission request made for each packet as shown in Fig. 11(a) or 11(b), a plurality of packets may be collectively requested for retransmission by providing a plurality of packets 1121 and a plurality of packet identifiers 1122, as shown in a packet 1120 in Fig. 11(c). Alternatively, as shown in a packet 1130 in Fig. 11(d), a plurality of sequential packets may be specified by providing a number of packets 1131 and a top packet identifier 1132.

In the above-mentioned manner, by collectively specifying a plurality of packets for the retransmission request, the packet for the retransmission request itself can be reduced.

While Figs. 11 show representative examples of the format for the packet for the retransmission request, the method of specifying the retransmission waiting time and a method of specifying packets may be arbitrarily combined. Moreover, a plurality of methods of specifying packets may be mixed. In this case, the contents of a retransmission request are identified by information on the request type 1102.

Upon receipt of a packet identifier of a dropped packet, and a content identifier corresponding to the packet identifier from the data selecting means 142, the retransmission request control means 138 requests the transmitter 101 to retransmit the dropped packet.

In this event, when "0" is specified in the retransmission waiting time 1103, this indicates that the retransmission is immediately requested. A number other than "0" set in the retransmission waiting time 1103 indicates a time period for which the receiver 131 waits for the reception of a retransmitted packet, and may be such a value as "5 minutes" or "15 minutes," by way of example (S1202 in Fig. 12). The waiting time may be determined by an input from the user, or a predetermined number may be inputted.

After the retransmission request control means 138 sets the retransmission waiting time 1103, the retransmission request transmitting means 137 transmits, for example, the packet 1100 shown in Figs. 11 to the transmitter 101 through the bidirectional communication path 122 (S1203 in Fig. 12). In this event, the transmitter 101 is determined based on the retransmission request destination 309 included in the content information 200.

After the receiver 131 has transmitted the retransmission request, the transmitter 101 transmits a response of request rejection notice, for example:
˙ when an unauthorized packet identifier or an unauthorized content identifier is specified;
˙ when a specified packet is not permitted the retransmission;
˙ when a total size of a specified packet is excessively large; and
˙ when it have been already impossible to transport a specific packet.

In such cases, the response is received by the retransmission request control means 138 through a response receiving means 136, causing the retransmission request control means 138 to terminate the retransmission request processing (Yes at S1204 → S1205 in Fig. 12).

When a response of retransmission request acceptance is transmitted from the transmitter 101 for the retransmission request, the retransmission request control means 138 stores the contents of the accepted retransmission request in a retransmission request storing means 140 (No at S1204 → S1206 in Fig. 12).

Subsequently, when a dropped packet corresponding to the retransmission request is transmitted through the broadcasting path 121, the packet is stored in the packet storing means 139 through the broadcasting receiving means 135, broadcasting reception control means 134 and error detecting means 141. However, before the storage, the received dropped packet is checked in the retransmission request control means 138, and when information on the corresponding dropped packet is present in the retransmission request storing means 140, this information is deleted (S1207 → S1209 in Fig. 12).

When the retransmission request control means 138 references the retransmission request storing means 140 at a given time and finds a packet which has not been transmitted (received) even after the determined retransmission waiting time 1103 has passed, a retransmission request is again transmitted to the transmitter 101 (S1208 → S1209 in Fig. 12). Here, when the dropped packet corresponding to the retransmission request is transmitted through the bidirectional communication path 122, the packet is stored in the packet storing means 139 through the response receiving means 136. However, before the storage, the received dropped packet is checked in the retransmission request control means 138, and when information on the corresponding dropped packet is present in the retransmission request storing means 140, this information is deleted in a manner similar to the foregoing (S1211 → S1209 in Fig. 12).

Description on whether the dropped packet is received by the receiver 131 through the broadcasting path 121 or bidirectional communication path 122 will be made below in the processing of the transmitter 101.

As the receiver 131 receives the dropped packets, the data recovering means 133 recovers music data.

The music data recovered by the data recovering means 133 is transmitted to the reproducing apparatus 132, for example, a television, a radio, a stereo or the like, as required, and the reproducing apparatus 132 reproduces the received music data. Moreover, the music data is stored in a storing means, not shown, as required, and read for reproduction in response to an instruction from the user.

In the above-mentioned manner, a retransmission request is stored in the retransmission request storing means in the receiver to confirm the receipt of dropped packets from the transmitter, thereby making it possible to receive the dropped packets, not received, without fail to receive the dropped packets through the bidirectional communication path, later described, without fail.

### (RETRANSMISSION PROCESSING IN TRANSMITTER)

As a retransmission request from the receiver 131 is received through a retransmission request receiving means 107, a retransmission control means 108 first confirms the contents of the received retransmission request.
here, for the retransmission request,
˙ when an unauthorized packet identifier or an unauthorized content identifier is specified;
˙ when a specified packet is not permitted the retransmission;
˙ when a total size of a specified packet is excessively large; and
˙ when it have been already impossible to transport a specific packet, a request rejection notice is transmitted to the receiver 131 through a responding means 106 and bidirectional communication path 122, and the retransmission processing is terminated (Yes at S1303 → S1304 in Fig. 13).

In the above-described manner, by rejecting a retransmission request which is determined as transmission disabled on the transmitter side, unnecessary retransmission waiting can be avoided in the receiver.

When the retransmission request is free of problem, the retransmission control means 108 transmits a request acceptance notice corresponding to the retransmission request to the receiver 131 through the response transmission means 106 and bidirectional communication path 122 (No at S1303 → S1305 in Fig. 13). Subsequently, the retransmission control means 108 stores the received retransmission request to the retransmission request storing means 110.

Next, after the lapse of a given time, the retransmission control means 108 totalizes retransmission requests received from a plurality of receivers and stored in the retransmission request storing means 110 to determine whether packets are retransmitted utilizing the broadcasting path 121 or bidirectional communication path 122 (S1306 in Fig. 13).

A specific example of the totalizing method is shown below. The retransmission control means 108 reads a retransmission request stored in the retransmission request storing means 110 at a certain taime, and creates a graph 1400 shown, for example, in Fig. 14. The graph 1400 visually shows retransmission requests for packets, which form part of respective contents, for each content (music data). For example, a content A1401 (music data A) is formed of 2000 packets designated packet identifiers "0001" to "2000." It can also seen from the graph that there are approximately 7 retransmission requests for a packet which forms part of the content A and has the packet identifier = "0001", and that there are approximately 780 retransmission requests for a packet which has the packet identifier "2000".

From the above-mentioned result of totalization, it can be determined, for example, that there are many retransmission requests for packets which form part of a content B1404, while there are few retransmission request for packets which form of a content C1405.

While all packets forming of a content may be delivered through the broadcasting path 121, different contents (for example, a content X, a content Y, or the like) have of course been transmitted, so that the broadcasting path 121 cannot be used only for the contents A to C.

Therefore, the retransmission control means 108 selects those having a predetermined threshold value or more, for example, those having 400 or more retransmission request packets in consideration of a current use situation of the broadcasting path 121 and the graph 1400 (packets 1403 which form of the content B and form of the content A, and have the packet identifiers in a range of "0700" to "2000").

The content identifier 311 corresponding to the selected packet, and the packet identifier 332 are transmitted to the broadcasting transmission control means 104 by the retransmission control means 108.

The broadcasting transmission control means 104 reads packets corresponding to the received content identifier 311 and the packet identifier 332 from the packet storing means 109, and transmits the read packets again to the receiver 131 through the broadcast transmitting means 105 (S1307 in Fig. 13).

The receiver 131, which has received the retransmitted packets through the broadcasting path 121, recovers data in a manner similar to the reception processing shown in Fig. 6.

During the retransmission of packets through the broadcasting path 121, those with shorter retransmission waiting time 1103, shown by the receiver 131, may be preferentially transmitted.

Packets below the predetermined threshold value, i.e., packets forming part of the content C and packets forming of the content A, which have packet identifiers in a range of "0001" to "0699", are not delivered from the broadcasting path 121. In this event, the retransmission request control means 138, which forms of the receiver 131, references the retransmission request storing means 140, and transmits repeated retransmission requests, for example, in a collective manner for those packets which already exceed the retransmission waiting time. As the repeated retransmission request is received by the transmitter 101 through the bidirectional communication path 121, the transmitter 101 reads corresponding packets for the retransmission request using the bidirectional communication path 122 from the packet storing means 109, and transmits the read packets through the bidirectional communication path 122 (S1308 → S1309 in Fig. 13).

The retransmission request control means 138, which has received retransmitted packets through the bidirectional communication path 122 and response receiving means 136, deletes information on the corresponding dropped packets in the retransmission request storing means 140, and stores the received packets in the packet storing means 139. Subsequently, the music data which has a complete set of packets is recovered by the data recovering means 139, and transmitted to the reproducing apparatus 132, for example, a television, a radio, a stereo or the like, as required, for reproduction.

In the above-mentioned manner, by selecting a transmission path utilized for the retransmission based on a retransmission request from the receiver, it is possible to carry out the retransmission, such as transmitting packets which must be retransmitted in large quantity through the broadcasting transmission path, and transmitting packets which cause no problem with a relatively small amount of retransmission through the bidirectional communication path. As a result, the uselessness which can occur in the retransmission using the broadcasting path, the retransmission of packets destined to a small number of receivers using the broadcasting path, can be minimized to effectively utilize the broadcasting path. It is also possible to solve problems which can occur in the retransmission using the bidirectional communication path, such as a problem of reserving a line, a problem of preparation for the line capability and performance more than necessity, and the like.

Moreover, in the receiver, the line use fee can be limited as compared with the acquisition of a large amount of dropped packets completely through the utilization of the bidirectional communication path, and required contents can be acquired without fail.

While in the above-mentioned first embodiment, dropped packets are transmitted utilizing the bidirectional communication path for the second retransmission request from the receiver, a selection may be made for retransmission using the broadcasting path and retransmission using the bidirectional communication path, for example, for the second and subsequent retransmission requests.

Moreover, while the above-mentioned first embodiment takes music data as an example of contents, a moving image, a still image, character data, audio data, a program or the like may also be used.

### (EMBODIMENT 2)

Next, description will be made on a second embodiment of a transmitter, a receiver and a transmission/reception system according to the present invention. The second embodiment is based on the above-mentioned first embodiment, and allows the user to specify a retransmission path on a receiver 131.

Specifically, when the receiver 131 confirms whether or not all packets are normal (S604) in Fig. 6, the user is prompted to select a retransmission path, for example, for each of contents (music data) which are not normal by displaying such contents.

Fig. 16 shows an example of display for prompting the user to select a retransmission path. Fig. 16 shows an input screen 1600 for inputting the user's instruction for contents which can be downloaded, based on a predetermined threshold value, for example, using a download situation 706 on a delivered data list 700 shown in the above-mentioned Fig. 7, and is displayed, for example, by a data selecting means 142.

The input screen 1600 displays a music name 701 of contents which have dropped packets (herein, a music name 4), and processing for the dropped packets can be selected with three buttons 1601 to 1603.

As a elements for the user to determine, the input screen 1600 also displays the proportion of normally received data to the entire content and an amount of data in dropped packets 1604, an expected waiting time 1605 until the completion of reception, a communication fee 1606 when a bidirectional communication path 122 is selected for the reception, and the like.

On the input screen 1600, when the user selects, for example, the "IGNORE" 1601, no retransmission request will be made for the dropped packets of the content. Moreover, normally received packets stored in a packet storing means 139 are deleted after the lapse of a given time. However, when dropped packets have been received through a broadcasting path 121 due to a retransmission request from another user or the like, the content may be preserved, regarded as normally received.

On the input screen 1600, when the user selects, for example, the "REQUEST RETRANSMISSION" 1602, a request for retransmitting dropped packets is transmitted to a transmitter 101 as a request for retransmission through the broadcasting path 121 (Yes at S1501 → S1502 → S1503 in Fig. 15). Specifically, a packet 1100, which has "broadcasting path" entered in a request type 1102, for example, is transmitted from a retransmission request control means 138 to a transmission control means 108 through the bidirectional communication path 122.

The transmitter 101, which has received the retransmission request, stores the retransmission request in a retransmission request storing means 110, in a manner similar to the above-mentioned first embodiment, totalizes, and transmits from the broadcasting path 121. The rejection of the retransmission request, setting of a waiting time, and the like are not necessarily performed.

Subsequently, the receiver 131 receives dropped packets through the broadcasting path 121 (S1504 in Fig. 15). However, the retransmission through the broadcasting path is not always performed. The receiver 131, which has received the dropped packets through the broadcasting path 121, recovers data to make the content reproducible, in a manner similar to the above-mentioned first embodiment (S1504 → S611 in Fig. 15).

On the input screen 1600, when the user selects, for example, the "ACQUIRE AGAIN IMMEDIATELY" 1603, a request for retransmitting dropped packets is transmitted to the transmitter 101 as a request for retransmission through the bidirectional communication path (No at S1501 → S1505 → S1506 in Fig. 15). Specifically, the packet 1100 which has "bidirectional communication path" entered in the request type 1102, for example, is transmitted from the retransmission request control means 138 to the transmission control means 108 through the bidirectional communication path 122.

In this event, it is checked for the retransmission request:
˙ whether an unauthorized packet identifier or an unauthorized content identifier is specified;
˙ whether a specified packet is not permitted the retransmission;
˙ when it have been already impossible to transport a specific packet, and dropped packets will not be received, if the retransmission request is rejected (Yes at S1507 → S1508 in Fig. 15).

If the transmission request is not rejected, the dropped packets will be received, which are shown in the retransmission request through the bidirectional communication path 122 (No at S1507 → S1509 in Fig. 15).

The receiver 131, which has received the dropped packets through the bidirectional communication path 122, recovers data in a manner similar to the above-mentioned first embodiment, thereby making the contents reproducible (S1509 → S611 in Fig. 15).

By allowing the user to select a path for retransmitting dropped packets at the receiver, a selection can be made in accordance with the importance, for example, receiving a content not important for the user utilizing the free broadcasting path, though the content cannot be received in some cases, and receiving an important content without fail utilizing the bidirectional communication path, even if it is fee-charging.

It is also possible to make a selection in accordance with the user's environment, for example, selecting the bidirectional communication path when the user enters an underground town or the like in which the broadcasting does not reach, and selecting the broadcasting path when the user is in a place at which the broadcasting can be received.

### (EMBODIMENT 3)

Next, description will be made on a third embodiment of a transmitter, a receiver and a transmission/reception system according to the present invention. The third embodiment will be described for a feature based on the above-mentioned first embodiment for changing the quality of communication through a broadcasting communication path in accordance with the totalization of retransmission requests.

Fig. 17 shows a graph showing the number of retransmission requests which was totalized by a retransmission control means 101 forming of a transmitter 101. The horizontal axis of the graph indicates the transmission time for packets which form of a content, while the vertical axis indicates the number of retransmission requests for each packet. In other words, a polygonal line 1704 indicates a change in retransmission request over time.

A data rate 1703 indicates a data rate when the content is transmitted through a broadcasting path 121. The data rate herein used indicates the proportion of data, forming of the content, to an entire packet. For example, by reducing the data rate to increase an error correcting code, the receiver can correct errors in received packets with a higher probability, i.e., the transmission quality is improved. Conversely, by increasing the data rate to reduce the error correcting code, the transmission efficiency can be improved, although errors can be corrected with a lower probability.

An upper limit value 1001 is an upper limit value for changing a transmission condition, while a lower limit value 1702 is a lower limit value for changing the transmission condition, details of which will be described later.

Immediately after the broadcasting is started with the data rete chosen to be 80 % to a time 1705, the number of retransmission requests is between the upper limit value 1701 and the lower limit value 1702. However, from the time 1705 to a time 1706, the number of retransmission requests exceeds the upper limit value 1701. Here, an increase in the number of retransmission requests may result from a low transmission quality. For this reason, it becomes necessary to ensure, for example, a number of lines with which the large amount of retransmission requests can be processed, and ensure the performance and bandwidth.

To solve the above problem, the retransmission control means 108 receives retransmission requests, and when the number of retransmission requests is larger than the upper limit value, the retransmission control means 108 instructs a broadcasting transmission control means 104 (or a packet generating means 103) to reduce the data rate (S1801 → Yes at S1802 → S1803 in Fig. 18).

Upon receipt of the instruction, the broadcasting transmission control means 104 reduces the data rate, for example, to 60 % to transmit the content.

As described above, by reducing the data rate, the transmission quality can be improved although the transmission efficiency is reduced. In other words, the number of retransmission requests is reduced by reducing the data rate.

From a time 1707 to a time 1709, the number of retransmission requests is below the lower limit value 1702. Here, a decrease in the number of retransmission requests may result from a low transmission efficiency. For this reason, the retransmission control means 108 instructs the broadcasting transmission control means 104 to increase the data rate (Yes at S1804 → S1805 in Fig. 18).

Upon receipt of the instruction, the broadcasting transmission control means 104 increases the data rate, for example, to 70 % to transmit the content.

The data rate suitable for a particular system can be automatically maintained by determining the upper limit value, for example, from the number of lines dedicated to process retransmission requests, performance, bandwidth and the like.

By dynamically changing the data rate for the content which utilize the broadcasting path based on retransmission requests, it is possible to maintain optimal transmission efficiency and transmission quality.

The number of retransmission requests need not be always reflected immediately to the transmission request. The number of retransmission requests may be accumulated as information on transmission results, and used as highly reliable documents in building a transmission path network and improving a transmission scheme.

### (EMBODIMENT 4)

Next, description will be made on a fourth embodiment of a transmitter, a receiver and a transmission/reception system according to the present invention. The fourth embodiment will be described for a feature, based on the above-mentioned first embodiment, for referencing the audience rate in accordance with the totalization of retransmission requests.

Fig. 19 is an example of graph which shows the audience rate of several contents, calculated by a receiving situation totalizing means 111 based on the number of retransmission requests. The vertical axis of the graph 1900 indicates the transmission time of packets, while the horizontal axis indicates the audience rate calculated from the number of retransmission requests for a packet which is transmitted at an associated time. The retransmission requests are transmitted from a receiver 131 to a transmitter 101 through a bidirectional communication path 122.

The transmission and reception of retransmission request have been described in detail in the first embodiment. However, as previously described in the first embodiment, the retransmission request is transmitted from the receiver when it fails to receive broadcast packets.

Therefore, the number of retransmission requests does not reflect the number of receivers which have received transmitted data.

For receiving a retransmission request from a receiver without fail, the receiving situation totalizing means 111 instructs a broadcasting transmission control means 104 to transmit packets which cannot be received. The packets which cannot be received refer to packets not transmitted, and packets which include erroneous data. The reception disabled packets may be generated based on a predetermined condition, such as at constant time intervals, or every constant number of packets, or the like.

Information on the transmitted reception disabled packets is stored, for example, in a storing means, not shown. Subsequently, a packet identifier specified in the retransmission request received by the receiver 131 can be compared with the information on the reception disabled packets to identify the cause for which the retransmission request was issued. Specifically, the number of retransmission requests for a retransmission disabled packet indicates the number of receivers which required to receive the packet, so that this number may be divided by the total number of receivers to derive the audience rate of the packet.

An audience rate 1903 in Fig. 19 graphically represents the audience rate acquired by generating reception disabled packets at regular time intervals along the time series. Fig. 19 can be referenced to check the audience corresponding to a transmitted content 1901 and a transmission time 1902.

In the above-mentioned manner, the receiving situation (audience rate) of contents can be known from the number of received retransmission requests by transmitting reception disabled packets at a certain time.

### (EMBODIMENT 5)

Next, description will be made on a fifth embodiment of a transmitter, a receiver and a transmission/reception system according to the present invention. The fifth embodiment will be described for a feature, based on the above-mentioned first embodiment, for charging contents using the retransmission request.

Fig. 20 shows an example of communication which is made between the transmitter 101 and the receiver 103 for the retransmission request.

First, a charging means 112, forming of the transmitter 101, uses, for example, a broadcasting transmission control means 104 to transmit a reception disabled packet generated by the transmitter 101. The receiver 131, which has received the reception disabled packet, transmits a retransmission request 2003 for the reception disabled packet.

The retransmission request 2003 is transmitted from the receiver 131 to the transmitter 101 by the procedure described in the first embodiment. The charging means 112, forming of the transmitter 101 that has received the retransmission request 2003, subsequently transmits an authentication request 2004 for the retransmission request 2003. The authentication request 2004 is a notice for requesting a receiver which has made a retransmission request to return information for identifying the receiver.

Upon receipt of the authentication request 2004, a charge supporting means 143, forming of the receiver 131, makes an authentication request 2005 for a user 202. The authentication request 2005 is an operation for prompting the user to enter, for example, a password and a user ID.

Then, the password and user ID, for example, entered by the user 2002 are transmitted from the receiver 131 to the transmitter 101 as an authentication response 2006.

However, when the authentication response can be made to the authentication request 2005 using information held in the receiver 131, for example, information for identifying the receiver, or set user information, information on a key for data reception, and the like, the authentication response 2006 may be transmitted without the authentication request 2005 to the user, and the authentication response 2006.

A charging means 106, forming of the transmitter 101, transmits a charging notice 2008 to the receiver 131 when it determines that the authentication response 2006 is proper. On the other hand, when the charging means 106 determines that the authentication response 2006 is unauthorized, the charging means 106 transmits a retransmission request rejection notice, without performing a charging procedure 2015 cosisting of charging notices 2008, 2009 and a charging response 2001, followed by the termination of the processing.

The accounting notice 2008 includes a use fee for paid data, and a payment method. The receiver 131 issues the charging notice 2009 to the user 2001. The charging notice 2009 is an operation for notifying the user of charging information provided by the receiver 131, and prompting the user to enter a selection as to the payment is made, and information required for the payment. Subsequently, a charging response 2010 entered by the user 2001 is transmitted to the transmitter 101.

When a charging acceptance and payment information have previously been set in the receiver 131, the charging response 2011 may be transmitted without the charging notice 2009 to the user, and a charging response 2010. When the transmitter 101 determines that the charging response 2011 is proper, the transmitter 101 transmits a request reception notice corresponding to the retransmission request 2003 to the receiver 131 as a retransmission response 2020.

Next, the receiver 131 transmits a retransmission data 2013 specified by the retransmission request 2003, followed by the termination of the processing. The receiver 131, when notified of the retransmission request acceptance in a retransmission response 2012, waits for the retransmission data, and receives all the retransmission data 2013, followed by the termination of the processing. For free data, the retransmission response 2020 and the retransmission data 2013 are transmitted subsequent to the authentication response 2006 without performing the charging procedure 2015.

The transmitter 101 can acquire detailed information on the receiver 131 by performing an authentication procedure 2014 consisting of the authentication request 2004 and authentication response 2006, so that the authentication procedure 2014 can be used, for example, as a part of the audience rate inquiry described in the fourth embodiment.

Alternatively, the reception can be limited under a predetermined condition based on acquired information on receivers. For example, a particular type of receivers is only permitted to receive a receiver control program, or users over a limited age are only permitted to receive age limited data.

While Fig. 20 shows that the retransmission data 2013 is transmitted using a bidirectional communication path 122, a broadcasting path 121 may be used instead. When paid data is retransmitted through a broadcasting path, the broadcasting can be implemented only for a receiver which has completed the charging procedure 2015 by encrypting the retransmission data 2013, and notifying key information for decryption in a retransmission response 2012. The authentication procedure 2014 and the charging procedure 2015 may be combined to implement the broadcasting with one request and one response.

In the above-mentioned manner, the transmitter can authenticate a receiver, limit destinations, charge paid data, and the like by manipulating contents to have the receiver generate a retransmission request.

### (EMBODIMENT 6)

Next, description will be made on a sixth embodiment of a transmitter, a receiver and a transmission/reception system according to the present invention. The sixth embodiment will be described for a configuration, based on the above-mentioned first embodiment, which is provided with both of a broadcasting path and a bidirectional communication path.

Fig. 21 shows a data delivery system which uses transceivers that are capable of transmitting and receiving through a broadcasting path. Transceivers 2102 to 2104 are transceivers which have the respective means 103 to 110 in the transmitter 101 and the respective means 133 to 142 in the receiver 131 in Fig. 1.

The transceivers 2102 to 2104 are capable of transmitting and receiving through a broadcasting path 121, and are interconnected by a bidirectional communication path 122. For example, the transceiver 2102 can broadcast data to the transceivers 2103 and 2104 using the broadcasting path 121. The procedure described in the first embodiment is used for broadcasting and receiving data. Similarly, with the procedure described in the first embodiment, the transceivers 2103 and 2104 receive broadcast data, and request for retransmission of data which they failed to receive through a communication path 2101, and retransmission data is transmitted through a broadcasting path 2100 or the communication path 2101.

The above-mentioned broadcasting, retransmission request, data retransmission are performed between the receiver 2103 and receivers 2102, 2104 as well as between the receiver 2104 and receivers 2102, 2103 completely in a similar manner.

There is no limitation to the number of receivers which constitute the data delivery system, so that a network using a broadcasting path or a communication path is built among an arbitrary number of transceivers. Each of the transceivers can implement efficient data transmission/reception by transmitting a large amount of data or data suitable for broadcasting using the broadcasting path 121, and transmitting data for compensating for the broadcasting transmission and individual data between transmitters using the bidirectional communication path 122.

By using the transceivers in the above-mentioned manner, it is possible to build a transmission network which appropriately uses the broadcasting communication path and bidirectional communication path to efficiently and flexibly deliver data.

### Industrial Applicability

As described above, in the transmitter, by selecting in the transmitter a transmission path to be utilized for retransmission based on a retransmission request from the receiver, it is possible to implement the retransmission such as transmitting, for example, packets which must be retransmitted in large quantity through the broadcasting transmission path, and transmitting packets which cause no problem with a relatively small amount of retransmission through the bidirectional communication path. As a result, the uselessness which can occur in the retransmission using the broadcasting path, the retransmission of packets destined to a small number of receivers using the broadcasting path, can be minimized to effectively utilize the broadcasting path. It is also possible to solve problems which can occur in the retransmission using the bidirectional communication path, such as a problem of reserving a line, a problem of preparation for the line capability and performance more than necessity, and the like. In other words, the present invention is suitable for a transmitter, a receiver and a broadcast data delivering method for broadcasting data from the transmission side through a broadcast delivery path which employs a broadcast wave as a medium, and receiving the broadcast data on the reception side.

## Claims

1. A receiver for receiving data broadcast from a transmitter through a broadcasting path which uses a broadcasting wave as a medium, comprising:
error detecting means of detecting errors in said received data;
retransmission request control means of transmitting a retransmission request which is a request for retransmission of data including said errors through a bidirectional communication path capable of bidirectionally transmitting data; and
receiving means of receiving data corresponding to said retransmission request through said broadcasting path or said bidirectional communication path.

2. The receiver according to claim 1, comprising:
a data recovering means of recovering said data by using a packet received normally and a packet corresponding to said retransmission request received through said broadcasting path or said bidirectional delivery path in a case where the reception of said data and said retransmission request are made in units of packets forming of said data.

3. The receiver according to claim 2, further comprising: a data selecting means of selecting data for which a retransmission request is made based on packets having errors and a predetermined threshold value, wherein
said retransmission request control means transmits a retransmission request only for data selected by said date selecting means.

4. The receiver according to claim 3, wherein
said data selecting means accepts a selection of data to be received made by the user, and
said retransmission request control means transmits a retransmission request for data selected by the user.

5. The receiver according to claim 1, wherein said retransmission request control means specifies a retransmission path for said data in said retransmission request.

6. A receiving method for receiving data broadcast from a transmitter through a broadcasting path which uses a broadcasting wave as a medium, comprising the steps of:
detecting errors in said received data;
transmitting a retransmission request which is a request for retransmission of data including said errors through a bidirectional communication path capable of bidirectionally transmitting data; and
receiving data corresponding to said retransmission request through said broadcasting path or said bidirectional communication path.

7. A program for causing a receiver for receiving data broadcast from a transmitter through a broadcasting path which uses a broadcasting wave as a medium to execute:
an error detecting step of detecting errors in said received data;
a retransmission requesting step of transmitting a retransmission request which is a request for retransmission of data including said errors through a bidirectional communication path capable of bidirectionally transmitting data; and
a receiving step of receiving data corresponding to said retransmission request through said broadcasting path or said bidirectional communication path.

8. A computer readable storing medium having recorded thereon a program for causing a receiver for receiving data broadcast from a transmitter through a broadcasting path which uses a broadcasting wave as a medium to execute:
an error detecting step of detecting errors in said received data;
a retransmission requesting step of transmitting a retransmission request which is a request for retransmission of data including said errors through a bidirectional communication path capable of bidirectionally transmitting data; and
a receiving step of receiving data corresponding to said retransmission request through said broadcasting path or said bidirectional communication path.

9. A transmitter for broadcasting data through a broadcasting path which uses a broadcasting wave as a medium, comprising:
retransmission request receiving means of receiving a retransmission request which is a request for retransmitting said data from a receiver to which said data is to be transmitted through a bidirectional communication path capable of bidirectionally transmitting data;
retransmission request storing means of storing said retransmission request; and
retransmission control means of selecting a transmission path utilized for retransmitting data corresponding to said retransmission request from said broadcasting path and said bidirectional communication path based on a retransmission request stored in said retransmission request storing means, and simultaneously retransmitting said corresponding data through a selected transmission path.

10. The transmitter according to claim 9, wherein said retransmission control means selects a transmission path for said data based on the number of retransmission requests stored in said retransmission request storing means.

11. The transmitter according to claim 9, wherein said retransmission control means retransmits data corresponding to the number of retransmission requests equal to or more than a predetermined threshold value through said broadcasting path.

12. The transmitter according to claim 11, wherein said retransmission request is transmitted in units of packets which form of said data while said transmission path is selected in units of said packets.

13. The transmitter according to claim 9, wherein said retransmission control means determines an order in which packets forming of said data are retransmitted based on a retransmission waiting time of a receiver included in said retransmission request.

14. The transmitter according to claim 9, wherein said retransmission control means transmits data through said broadcasting path or said bidirectional communication path specified by a retransmission request transmitted from said receiver.

15. The transmitter according to claim 9, wherein said retransmission control means dynamically changes a transmission efficiency or a transmission quality on said broadcasting path based on the number of retransmission requests stored in said retransmission request storing means.

16. A transmitter for broadcasting data through a broadcasting path which uses a broadcasting wave as a medium, comprising:
broadcasting transmission control means of transmitting reception disabled data which cannot be received to a receiver to which said data is to be transmitted;
retransmission request receiving means of receiving a retransmission request which is a request for retransmitting said reception disabled data from said receiver through a bidirectional communication path capable of bidirectionally transmitting data;
retransmission request storing means of storing said retransmission request; and
receiving situation totalizing means of totalizing a receiving situation of said receiver based on retransmission requests stored in said retransmission request storing means.

17. The transmitter according to claim 16, wherein said receiving situation is an audience rate for each data.

18. A transmitter for broadcasting data through a broadcasting path which uses a broadcasting wave as a medium, comprising:
broadcasting transmission control means of transmitting reception disabled data which cannot be received to a receiver to which said data is to be transmitted;
retransmission request receiving means of receiving a retransmission request which is a request for retransmitting said reception disabled data from said receiver through a bidirectional communication path capable of bidirectionally transmitting data;
retransmission request storing means of storing said retransmission request; and
charging means of authenticating and/or charging a receiver which transmits a retransmission request based on the retransmission request stored in said retransmission request storing means.

19. A transmission method for broadcasting data through a broadcasting path which uses a broadcasting wave as a medium, comprising the steps of:
receiving a retransmission request which is a request for retransmitting said data from a receiver to which said data is to be transmitted through a bidirectional communication path capable of bidirectionally transmitting data;
selecting a transmission path utilized for retransmitting data corresponding to said retransmission request from said broadcasting path and said bidirectional communication path based on said retransmission request; and
retransmitting data corresponding to said retransmission request through said selected transmission path.

20. A program for causing a transmitter for broadcasting data through a broadcasting path which uses a broadcasting wave as a medium to execute:
a receiving step of receiving a retransmission request which is a request for retransmitting said data from a receiver to which said data is to be transmitted through a bidirectional communication path capable of bidirectionally transmitting data;
a selecting step of selecting a transmission path utilized for retransmitting data corresponding to said retransmission request from said broadcasting path and said bidirectional communication path based on said retransmission request; and
a retransmitting step of retransmitting data corresponding to said retransmission request through said selected transmission path.

21. A computer readable storing medium having recorded thereon a program for causing a transmitter for broadcasting data through a broadcasting path which uses a broadcasting wave as a medium to execute:
a receiving step of receiving a retransmission request which is a request for retransmitting said data from a receiver to which said data is to be transmitted through a bidirectional communication path capable of bidirectionally transmitting data;
a selecting step of selecting a transmission path utilized for retransmitting data corresponding to said retransmission request from said broadcasting path and said bidirectional communication path based on said retransmission request; and
a retransmitting step of retransmitting data corresponding to said retransmission request through said selected transmission path.

22. A broadcast data delivering method for broadcasting data from a transmission side through a broadcasting path which uses a broadcasting wave as a medium and for receiving said broadcast data on a reception side, comprising the steps of:
detecting errors in said received data;
transmitting a retransmission request which is a request for retransmission of data including said errors through a bidirectional communication path capable of bidirectionally transmitting data;
selecting a transmission path utilized for retransmitting data corresponding to said retransmission request from said broadcasting path or said bidirectional communication path based on said retransmission request; and
retransmitting data corresponding to said retransmission request through a selected transmission path.

23. A receiver for receiving a plurality of contents included in data broadcast from a transmitter through a broadcasting path which uses a broadcasting wave as a medium, comprising:
error detecting means of detecting errors in packets which form of said received data; and
data selecting means of eliminating contents which include packets including said errors, creating a delivered data list consisting only of normally received contents, and selectively displaying the delivered data list to a user.

## Amended claims

### Amended claims under Art. 19.1 PCT

1. (CANCELLED)

2. (CANCELLED)

3. (CHANGED) A receiver for receiving data formed of packets and broadcast from a transmitter through a broadcasting path which uses a broadcasting wave as a medium, comprising:
error detecting means of detecting errors in said received data;
data selecting means of selecting data for which a retransmission request which is a request for retransmission of data is made based on packets having errors and a predetermined threshold value;
retransmission request control means of transmitting a retransmission request only for data selected by said data selecting means through a bidirectional communication path capable of bidirectionally transmitting data;
receiving means of receiving data corresponding to said retransmission request through said broadcasting path or said bidirectional communication path; and
data recovering means of recovering said data by using a packet received normally and a packet corresponding to said retransmission request received through said broadcasting path or said bidirectional delivery path.

4. The receiver according to claim 3, wherein
said data selecting means accepts a selection of data to be received made by the user, and
said retransmission request control means transmits a retransmission request for data selected by the user.

5. (CHANGED) A receiver for receiving data broadcast from a transmitter through a broadcasting path which uses a broadcasting wave as a medium, comprising:
error detecting means of detecting errors in said received data;
retransmission request control means of transmitting a retransmission request which is a request for retransmission of data including said errors, with a retransmission path for said data in said retransmission request specified, through a bidirectional communication path capable of bidirectionally transmitting data; and
receiving means of receiving data corresponding to said retransmission request through said broadcasting path or said bidirectional communication path.

6. (CANCELLED)

7. (CANCELLED)

8. (CANCELLED)

9. A transmitter for broadcasting data through a broadcasting path which uses a broadcasting wave as a medium, comprising:
retransmission request receiving means of receiving a retransmission request which is a request for retransmitting said data from a receiver to which said data is to be transmitted through a bidirectional communication path capable of bidirectionally transmitting data;
retransmission request storing means of storing said retransmission request; and
retransmission control means of selecting a transmission path utilized for retransmitting data corresponding to said retransmission request from said broadcasting path and said bidirectional communication path based on a retransmission request stored in said retransmission request storing means, and simultaneously retransmitting said corresponding data through a selected transmission path.

10. The transmitter according to claim 9, wherein said retransmission control means selects a transmission path for said data based on the number of retransmission requests stored in said retransmission request storing means.

11. The transmitter according to claim 9, wherein said retransmission control means retransmits data corresponding to the number of retransmission requests equal to or more than a predetermined threshold value through said broadcasting path.

12. The transmitter according to claim 11, wherein said retransmission request is transmitted in units of packets which form of said data while said transmission path is selected in units of said packets.

13. The transmitter according to claim 9, wherein said retransmission control means determines an order in which packets forming of said data are retransmitted based on a retransmission waiting time of a receiver included in said retransmission request.

14. The transmitter according to claim 9, wherein said retransmission control means transmits data through said broadcasting path or said bidirectional communication path specified by a retransmission request transmitted from said receiver.

15. The transmitter according to claim 9, wherein said retransmission control means dynamically changes a transmission efficiency or a transmission quality on said broadcasting path based on the number of retransmission requests stored in said retransmission request storing means.

16. A transmitter for broadcasting data through a broadcasting path which uses a broadcasting wave as a medium, comprising:
broadcasting transmission control means of transmitting reception disabled data which cannot be received to a receiver to which said data is to be transmitted;
retransmission request receiving means of receiving a retransmission request which is a request for retransmitting said reception disabled data from said receiver through a bidirectional communication path capable of bidirectionally transmitting data;
retransmission request storing means of storing said retransmission request; and
receiving situation totalizing means of totalizing a receiving situation of said receiver based on retransmission requests stored in said retransmission request storing means.

17. The transmitter according to claim 16, wherein said receiving situation is an audience rate for each data.

18. A transmitter for broadcasting data through a broadcasting path which uses a broadcasting wave as a medium, comprising:
broadcasting transmission control means of transmitting reception disabled data which cannot be received to a receiver to which said data is to be transmitted;
retransmission request receiving means of receiving a retransmission request which is a request for retransmitting said reception disabled data from said receiver through a bidirectional communication path capable of bidirectionally transmitting data;
retransmission request storing means of storing said retransmission request; and
charging means of authenticating and/or charging a receiver which transmits a retransmission request based on the retransmission request stored in said retransmission request storing means.

19. A transmission method for broadcasting data through a broadcasting path which uses a broadcasting wave as a medium, comprising the steps of:
receiving a retransmission request which is a request for retransmitting said data from a receiver to which said data is to be transmitted through a bidirectional communication path capable of bidirectionally transmitting data;
selecting a transmission path utilized for retransmitting data corresponding to said retransmission request from said broadcasting path and said bidirectional communication path based on said retransmission request; and
retransmitting data corresponding to said retransmission request through said selected transmission path.

20. A program for causing a transmitter for broadcasting data through a broadcasting path which uses a broadcasting wave as a medium to execute:
a receiving step of receiving a retransmission request which is a request for retransmitting said data from a receiver to which said data is to be transmitted through a bidirectional communication path capable of bidirectionally transmitting data;
a selecting step of selecting a transmission path utilized for retransmitting data corresponding to said retransmission request from said broadcasting path and said bidirectional communication path based on said retransmission request; and
a retransmitting step of retransmitting data corresponding to said retransmission request through said selected transmission path.

21. A computer readable storing medium having recorded thereon a program for causing a transmitter for broadcasting data through a broadcasting path which uses a broadcasting wave as a medium to execute:
a receiving step of receiving a retransmission request which is a request for retransmitting said data from a receiver to which said data is to be transmitted through a bidirectional communication path capable of bidirectionally transmitting data;
a selecting step of selecting a transmission path utilized for retransmitting data corresponding to said retransmission request from said broadcasting path and said bidirectional communication path based on said retransmission request; and
a retransmitting step of retransmitting data corresponding to said retransmission request through said selected transmission path.

22. A broadcast data delivering method for broadcasting data from a transmission side through a broadcasting path which uses a broadcasting wave as a medium and for receiving said broadcast data on a reception side, comprising the steps of:
detecting errors in said received data;
transmitting a retransmission request which is a request for retransmission of data including said errors through a bidirectional communication path capable of bidirectionally transmitting data;
selecting a transmission path utilized for retransmitting data corresponding to said retransmission request from said broadcasting path or said bidirectional communication path based on said retransmission request; and
retransmitting data corresponding to said retransmission request through a selected transmission path.

23. A receiver for receiving a plurality of contents included in data broadcast from a transmitter through a broadcasting path which uses a broadcasting wave as a medium, comprising:
error detecting means of detecting errors in packets which form of said received data; and
data selecting means of eliminating contents which include packets including said errors, creating a delivered data list consisting only of normally received contents, and selectively displaying the delivered data list to a user.
